Europäisches Patentamt

European Patent Office

Office européen des brevets

(19)

(11) Publication number: **0 054 693**
**B1**

(12) **EUROPEAN PATENT SPECIFICATION**

(45) Date of publication of patent specification: **28.12.88**

(21) Application number: **81108976.2**

(22) Date of filing: **27.10.81**

(51) Int. Cl.⁴: **G 09 G 1/02,** G 09 G 1/16, G 06 F 15/20

(54) Word processing system with full page representation display.

(30) Priority: **24.12.80 US 219668**
**30.12.80 US 221160**
**30.12.80 US 227109**
**30.12.80 US 221671**
**24.12.80 US 219666**
**24.12.80 US 219683**

(43) Date of publication of application:
**30.06.82 Bulletin 82/26**

(45) Publication of the grant of the patent:
**28.12.88 Bulletin 88/52**

(84) Designated Contracting States:
**BE CH DE FR GB IT LI NL SE**

(56) References cited:
**EP-A-0 020 932**
**DE-A-2 724 158**

**IBM TECHNICAL DISCLOSURE BULLETIN, vol.
22, no. 9, February 1980, pages 3917-3918, New
York, US J.W. RICE et al.: "Word processing
terminal with dual display"**

(73) Proprietor: **International Business Machines
Corporation
Old Orchard Road
Armonk, N.Y. 10504 (US)**

(72) Inventor: **Demke, Kent Ray
8505 Grayledge Drive
Austin Texas 78753 (US)**
Inventor: **Mumola, Joanne Lorraine
3910 Sierra Drive
Austin Texas 78731 (US)**
Inventor: **Dwire, Jerold Dennis
1101 Limerock Drive
Round Rock Texas 78664 (US)**

(74) Representative: **Combeau, Jacques et al
Compagnie IBM France Département de
Propriété Intellectuelle
F-06610 La Gaude (FR)**

(56) References cited:
**IBM TECHNICAL DISCLOSURE BULLETIN, vol.
19, no. 9, February 1977, pages 3248-3249, New
York, US C.R. BRINGOL: "Abbreviated
character font display"**

(58) References cited:

IBM TECHNICAL DISCLOSURE BULLETIN, vol. 15, no. 7, December 1972, page 2136, New York, US G.T. WEBB: "Combination of alphanumeric and formatting data on CRT display"

## Description

### Technical field of the invention

This invention relates to text editing with the aid of a display for example a cathode ray tube (CRT). More particularly it relates to a technique for reducing and displaying a representation of a full page of text on less than the entire display.

### Background art

In word processing systems with a display for displaying text as it is entered and edited, an operator is usually unable to display an entire page because of the size of the screen. Often times, however, seeing the full page is desirable as it enables the operator to appreciate the proper spatial relationship of the text to the page boundaries.

One prior art technique for solving this problem is described in US—A—4,168,489 wherein the actual text characters are compressed for the miniature format display. The height of each character is reduced by utilizing only certain of the rows of vertical dots. Horizontal reduction is accomplished by means of a circuit which decreases the current flowing through the horizontal winding of the cathode ray tube deflection yoke. The lessened current compresses the image width on the visual display screen. That patent also discusses other prior art techniques for reducing a page of text to fit within the confines of a partial page word processing system and points out why they are inappropriate. This reference teaches reduction of a page to about one-third its size so as to effectively fill the viewing area of the display. That is, a full page of text is displayed using characters reduced in both the horizontal and vertical dimensions of two-thirds. Not all of the compressed characters are legible. Normal word processing functions can be performed, however. No mention is made of specific means for handling interlinear spacing within the compressed page display.

Another approach can be found in *IBM Technical Disclosure Bulletin* "Abbreviated Character Font Display", Volume 19, No. 9, February 1977, page 3248. That article discloses a technique for displaying significant shapes of characters, words and phrases to allow an operator the ability to quickly access a particular portion of the page without actually reading displayed text.

A different approach is illustrated in *IBM Technical Disclosure Bulletin* article "Combination of Alphanumeric and Formatting Data on the CRT Display", Volume 15, No. 7, December 1972, page 2136. A single dot is used to represent each normally 5×7 dot character. In this technique, the operator can see several lines of text in normal size as well as the total unit of text as represented by dots only. The active window area of the dot only portion of the display is intensified so that the operator can perceive the format relationship of the active text to the entire text. This active window may be moved at the operator's discretion. Interactivity is not disclosed in this article.

Nor is there any attempt to make the displayed text representation proportional to hard copy page size, print pitch or orientation.

US—A—4,107,664 relates to raster scanned display systems in which character size is enlarged in the horizontal dimension by increasing the number of times each dot is sequentially displayed.

None of the above references relates to displaying an outline around the reduced size image with the outline directly proportional to the actual page size. It is known, however, to use graphic font symbols to provide outlines but these font symbols are fixed in size.

The problem of lack of proportionality in a page outline addressed by the present invention has not arisen previously, as best known, because there has been no combination on the same line of standard graphic symbols and miniature character representations. Were it desired to outline a page representation comprised of miniature character indicators with an outline of standard graphic symbols the result would not be satisfactory because the graphic symbols would be generated in character boxes of a fixed size which would preclude proportionality which would preclude displaying character representations up to the page outlines.

### Disclosure of the invention

The present invention is set out in the claims 1 and 27. It provides a means for displaying a representation of a full page of text on less than an entire display.

The miniature full page representation is dimensioned to provide proportionality to the actual page.

This invention provides along with the miniature full page representation the capability to display normal size text on at least three side of the miniature page.

This invention provides system control of placement of the miniature page on the display.

This invention provides a technique for reducing the matrix size required for representing text on a display.

The present invention provides proportionally outlined representations of a full page of text on a video display of a word processing system.

The invention outlines a full page representation on less than an entire screen using one matrix construct to represent both character and outline symbols.

The present invention provides an interactive mode in a word processing system to enable comprehension of format and spatial relationships while simultaneously processing text.

The present invention provides the advantages of a full page size display on a 25 line×80 character display.

The present invention improves a word processing system operator's appreciation of the spatial relationships of text to full page boundaries.

It provides a representation of a full page of text on less than an entire CRT screen, representation which is proportional to hard copy output in page size and print pitch.

More particularly it provides multiple half-line spacings within a miniature representation of a full page on less than an entire display screen in a word processing system.

The present invention utilizes attributes preceding character information to indicate to the system whether full size character data is to be displayed or miniature page representations. A technique with minimal impact on existing circuitry allows several standard page sizes, for example, 8 1/2×11, and 8 1/2×14, to be represented on less than the entire CRT screen oriented with either their long or short sides parallel with the base of the display. To the standard attribute information stored with each displayable character location for conveying information to the system, such as turn on blink, bright, underscore, or the like, an extra attribute is defined for entering the miniature page mode which gives control where the miniature page is to be positioned on the screen.

Reduction in the area required to display a full page is accomplished by first storing in the display buffer a one bit indication of the presence or absence of a character. Normally the display buffer stores the addresses for a character generator. Whereas in the miniature display mode a number of characters, in this case 16, are stored where the address of a single character code would ordinarily be stored. When it is time to display, a "1" causes a display of four dots in a 2×4 box and a "0" causes no dots to be displayed; The result is that each normally 8×16 character box character is represented in a 2×4 character box.

The same construct is used to generate a page outline proportional to the size of the desired hard copy output. Character representation symbols are included at the beginning and end of lines of miniature text representations to form vertical portions of the outline. By using only miniature character representations for both text and page outlines proportionality is achieved, and text can be displayed right up to the page outlines.

In support of normal interactive word processing functions, the full size text includes a scale line and a cursored full size text line. The miniature page representation is comprised of 2×4 matrix character indicators for each 8×16 normal size character. Within the miniature page representation is an indicator of the cursor position corresponding to that associated with the full size line of active text. Stated differently there are two cursors displayed. The first is associated with a full size line of active text which when displayed may be less than the entire line of text. The second cursor is a position within the miniature page representation indicating exactly where the active character is with respect to the resulting output. The cursor moves along the scale line associated with the active text line as viewed by the operator during text editing. When horizontal scrolling occurs that cursor moves to the left of the screen while the cursor within the miniature page continues to indicate the position of the active text character as related to the format of the entire page.

Proportionality between the represented text and output pitch is achieved by displaying "padding" character symbols at horizontal intervals within a line. These intervals are chosen as a function of operator indicated desired output pitch as well as the width to height ratio of a dot produced on the display screen. The "padding" character symbols are the result of repeating a displayed character indicator.

When it is desired to display a representation of an entire page, the word processing system main memory is accessed and for each character a single bit is stored in the display buffer. Likewise, each space is represented in the display buffer by a 0 and each character by a 1. Two bytes, 16 bits, can be used to represent regular characters in the display memory. Therefore, the display buffer contains 16 bits for a regular character. By representing each character or space by a single bit, 16 characters/spaces may be represented in the display buffer in the space normally occupied by the code for a single character. These 16 character indicators represent four characters from each of four lines.

On output, each bit of data from the display buffer is converted from a one bit representation to a 2×4 dot matrix character box. Each 2×4 box represents the presence or absence of a single character. The top two rows are always blank for regular spacing while the bottom two rows are dots if there is a character, and blank if there is no character.

Integral spacing between lines in the miniature page representation is accomplished by inserting a line(s) of blanks between lines of character representations.

Multiple half-line spacing is accomplished in a two step process. First, a blank line(s) is inserted where needed. Second, to achieve half-line spacing, the contents of a row of 2×4 character boxes are reversed so that the top two rows are dots and the bottom two rows are always blank.

Brief description of Figures

Other features and advantages of the present invention will become apparent from the following description taken in connection with the accompanying drawings wherein:

Fig. 1 is a block diagram of the system in which the present invention is implemented.

Fig. 2 is a more detailed diagram of miniature page generator block 50 of Fig. 1.

Fig. 3 is a schematic representation of a display screen when the present invention is implemented.

Fig. 4 is a schematic illustration of a full size character box.

Fig. 5 illustrates both how the miniature character constructs are related to a single 8×16

character box and how the outline is related to displayed data.

Fig. 6 shows an 8×16 character box with several graphic symbols therein.

Fig. 7 is an illustration of a portion of a line of text represented using the 2×4 character boxes.

Fig. 8 is the text representation of Fig. 7 as modified for 12 pitch proportionality.

Fig. 9 is the text representation of Fig. 7 as modified to be proportional to 10 pitch output.

Fig. 10 illustrates the relation between attribute bits and line space within a character box.

Fig. 11 is an illustration of what the system does to display a miniature page.

Fig. 12 illustrates what the processor does to display a miniature page.

Fig. 13 shows schematically two entries in refresh memory 18 of Fig. 1.

Fig. 14A and Fig. 14B are an illustration of what the system does to produce text representations as shown in Figs. 8 and 9.

Figs. 15A—15C are an illustration of what the processor 6 of Fig. 1 does to load refresh memory 18 with miniature page data.

Fig. 16 shows wave forms representing the signals output from timing generator 10 of Fig. 1.

## Description of a preferred embodiment

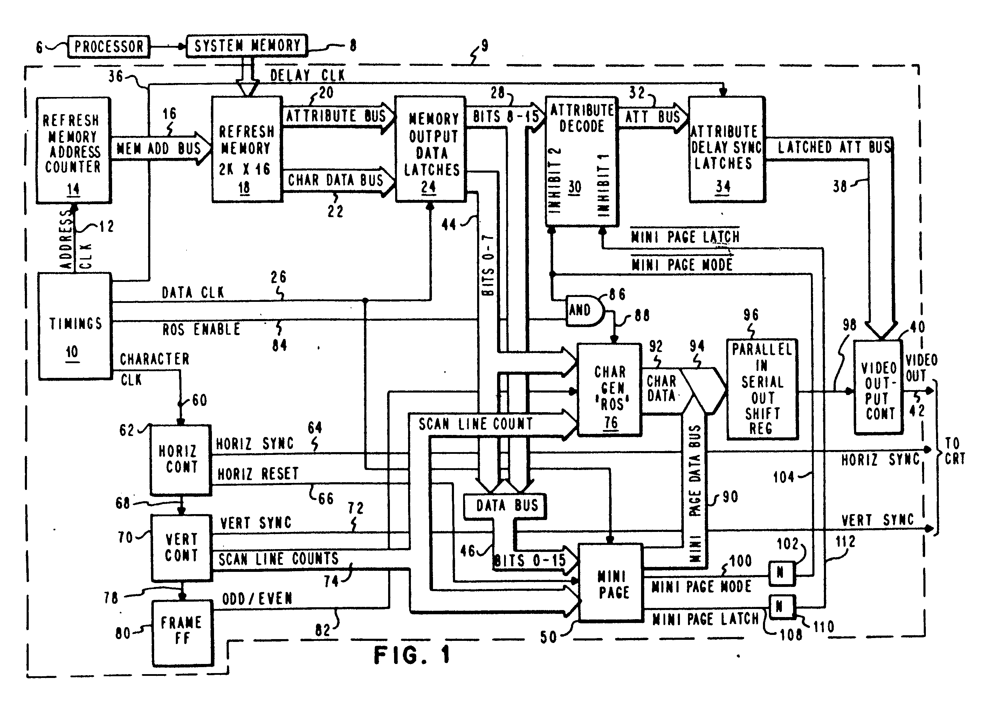

Fig. 1 is a block diagram of a typical implementation of a word processing system in which the invention is embodied. The illustrated system includes processor 6, main memory 8, a display and a display interface logic 9. Only those connections between processor 6, main memory 8 and display interface logic 9 are shown as needed for purposes of explanation of the invention. Other interconnections therebetween are conventional and well understood by those skilled in the art.

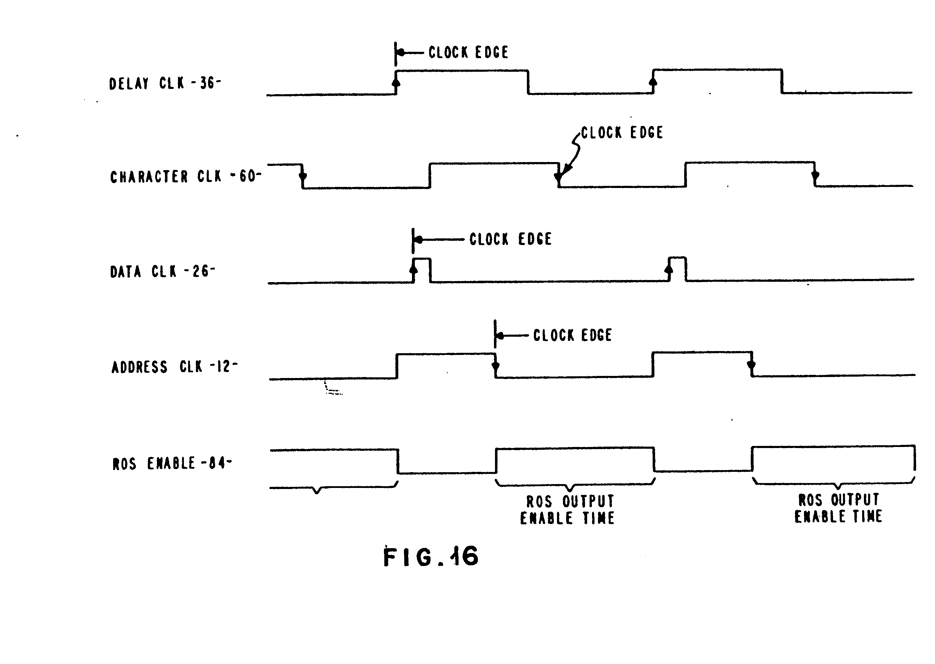

Timing generator block 10 provides various clocking signals for the word processing system illustrated. The wave forms of the signals output by timing generator 10 are illustrated in Fig. 16 with the different clock edges. The address clock signal on line 12 is input to refresh memory address counter 14 whose output appears on memory address bus 16. The address placed on bus 16 by processor 6 is input to the refresh memory 18. Attribute bus 20, as well as character data bus 22, are two outputs from refresh memory 18. The data on both buses 20 and 22 are latched into memory output data latches 24. Another clock signal from timing generator block 10 is the data clock on line 26 which is input to data latches 24 for controlling input thereto. Eight bits on bus 28 are output from latches 24 to attribute decoder 30. Once decoded, attribute data is output on bus 32 and is input to attribute delay synchronization latches 34 under control of delay clock signals on line 36. The latched attribute data is output on bus 38 to video output control 40, the output of which on line 42 is the video input to the CRT monitor (not shown).

The other eight bits of character data are output from memory output data latches 24 along bus 44. The total 16 bits of character information from latches 24 on the two buses 28 and 44 are joined in data bus 46 prior to being input to miniature page generator 50. Miniature page generator 50 also receives from timing generator 10 data clocking signals along line 26.

The character clock signal on line 60 is also output from timing generator 10. Character clock signals on line 60 are input to horizontal control 62 which generates horizontal synchronization signals on line 64 which is one input to the CRT monitor (not shown). Also generated in horizontal control 62 are horizontal reset signals on line 66. Horizontal reset signals on line 66 are input to miniature page generator 50 for reasons which will become clear as this description progresses. Vertical clock signals are generated in horizontal control 62 and are passed along line 68 to vertical control 70. Vertical control 70, in a conventional manner, generates vertical synchronization signals along line 72 for input to the CRT monitor. Vertical control 70 also generates counts of scan lines displayed on bus 74. Scan line count bus 74 is input to both miniature page generator 50, for purposes which will subsequently become clear, and to character generator storage 76. Vertical control 70 generates frame clock signals on line 78 which are input to frame flip-flop 80. Frame flip-flop 80 generates odd/even signals indicative of frame status in interlaced scanning terms and passes them along line 82 to character generator storage 76.

Character generator storage 76 also has an input from bus 44. Timing generator 10 generates the character generator storage enable signal ROS ENABLE along line 84 which is gated through AND gate 86 and which gives the ROS output enable time. The signal arising in AND gate 86 passes along line 88 to character generator storage 76.

Miniature page generator 50 has three outputs. The first is along the miniature page data bus 90 which is DOT—OR'D with the character data bus 92 from character generator 76. Either bus 90 or bus 92 data, as will become clear, is on bus 94 which is input to parallel to serial shift register 96. Serial data is output on line 98 to video output control 40. Another output from miniature page generator 50 is the miniature page mode signal on line 100 which is inverted by inverter 102. The inverted value on line 104 is an input to both the Inhibit 2 input of attribute decode logic 30 as well as to AND gate 86. The final output of miniature page generator 50 is the miniature page latch signal on line 108 which is inverted by inverter 110. The inverted value of the miniature page latch signal on line 112 is the other Inhibit 1 input to the attribute decode logic 30.

Miniature page generator 50 is a key element of the system in which the present invention is implemented. Miniature page data to be displayed on the screen is written into refresh memory 18 using conventional write operations which form no part of the present invention. Once an operator has indicated to a system employing the invention a desire to display a miniature representation of a page, conventional techniques are used to read characters from the main or system memory 8 and to store "1"s for characters and "0"s for spaces in groups of 16 bits in display refresh memory 18.

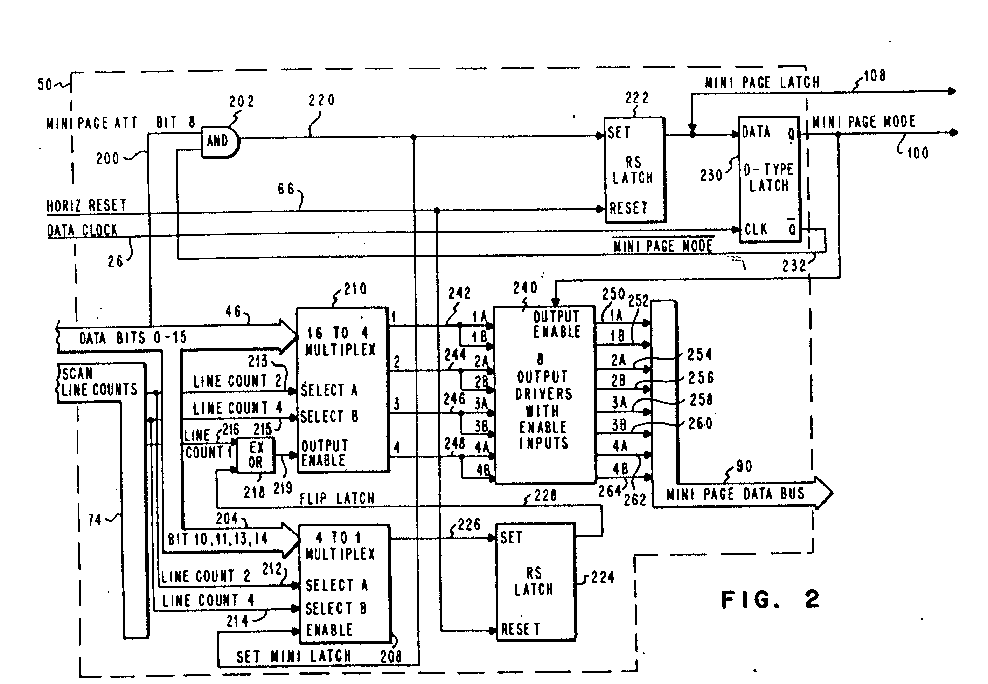

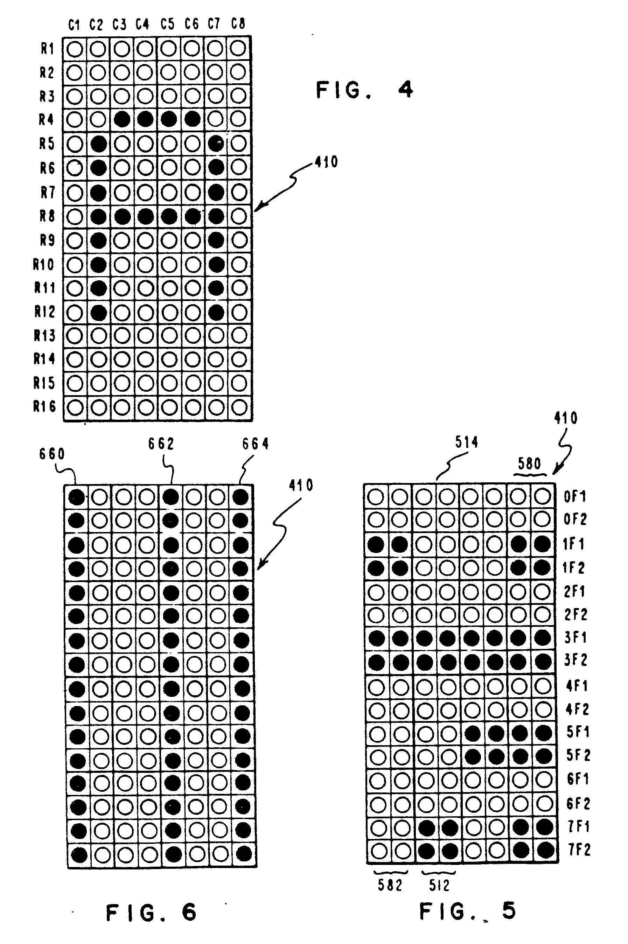

Referring now to Fig. 2 the internal logic of miniature page gensrator 50 is shown in a greater level of detail. One of 16 data bits on bus 46, bit 8, is the miniature page attribute and is placed on line 200 as one input to AND gate 202. Four other bits, 10, 11, 13, and 14, from data bus 46 are passed on bus 204 to 4 to 1 multiplexer 208. Multiplexer 208 provides the set signal on line 226 for latch 224 by determining as a function of the state of the signal on lines 212 and 214 which bit from bus 204 and thus which miniature line is to be flipped. This operation will be determined in more detail in connection with Fig. 6. Scan line count bus 74 provides inputs on lines 212 and 214 to 4 to 1 multiplexer 208.

Bus 46, carrying 16 bits of data is applied to 16 to 4 multiplexer 210. Multiplexer 210 is provided to divide the 16 data bits on bus 46 into four groups of four. Scan line counts 2 and 4 on lines 213 and 215, respectively, are taken from scan line count bus 74. Scan line count 2 provides a Select A input and scan line count 4 the Select B input to multiplexer 210. The particular four bits taken from bus 46 are a function of the states of scan line counts 2 and 4. Scan line count 1 on line 216 is the output enable signal for multiplexer 210, applied through EXCLUSIVE OR circuit 218 on line 219.

Each group of four bits is broken down one bit each on lines 242, 244, 246, and 248, respectively, on output from multiplexer 210. Those lines, 242, 244, 246, and 248, are fanned out so that each one provides two inputs to a block of eight output drivers 240. When the miniature page mode indicator on line 100 is up, it enables output from the eight output drivers comprising block 240. The two bits derived from the one bit on line 242 are output on lines 250 and 252. Similarly, the two bits from line 244 are output on 254 and 256, the two from line 246 on lines 258, 260, and the two from line 248 on lines 262 and 264. These eight bits make one parallel word or byte of data on miniature page data bus 90 which provides an input to parallel to serial converter 96 in Fig. 1.

The serial output from shift register 96 in Fig. 1 is provided to video output control 40 in the conventional manner for display on the CRT. Thus, the single bit stored in refresh memory 18 as a result of examining the data in the system main memory is changed to double dots in a 2×4 character box for output in the miniature page mode.

These same scan line count value signals, Line Count 2 and Line Count 4, are also applied to the Select inputs of 16 to 4 multiplexer 210 on lines 213 and 215. Line Count 1 is passed along line 216 to exclusive OR gate 218, the output of which on line 219 is the Output Enable signal for 16 to 4 multiplexer 210.

The output of AND gate 202 is the set miniature page latch signal on line 220. This signal is applied to the set input of RS latch 222. The signal on line 220 is also the enable input for 4 to 1 multiplexer 208. The reset signal for RS latch 222 is the horizontal reset signal on line 66. RS latch 222 develops miniature page latch signal 108 which, as will be recalled is inserted and then used as an inhibit input to attribute decode logic 30 of Fig. 1.

The set input to RS latch 224 is along line 226, the output of 4 to 1 multiplexer 208. Horizontal reset signal on line 66 is also used to reset RS latch 224. The output of RS latch 224 which appears on line 228 is the flip latch signal and is the other input to exclusive OR circuit 218.

Miniature page latch signal on line 108 is the data input to D-Type latch 230. The clock input to latch 230 is the data clock signal on line 26 from timing signal generator 10 in Fig. 1. Latch 230 develops two outputs. The Q output is the miniature page mode signal on line 100, and the Q̄ output, the inverted miniature page mode signal, on line 232 which is the other input to AND gate 202. The Q output of latch 230, the miniature page mode signal on line 100, is also applied to the Output Enable of output drivers 240.

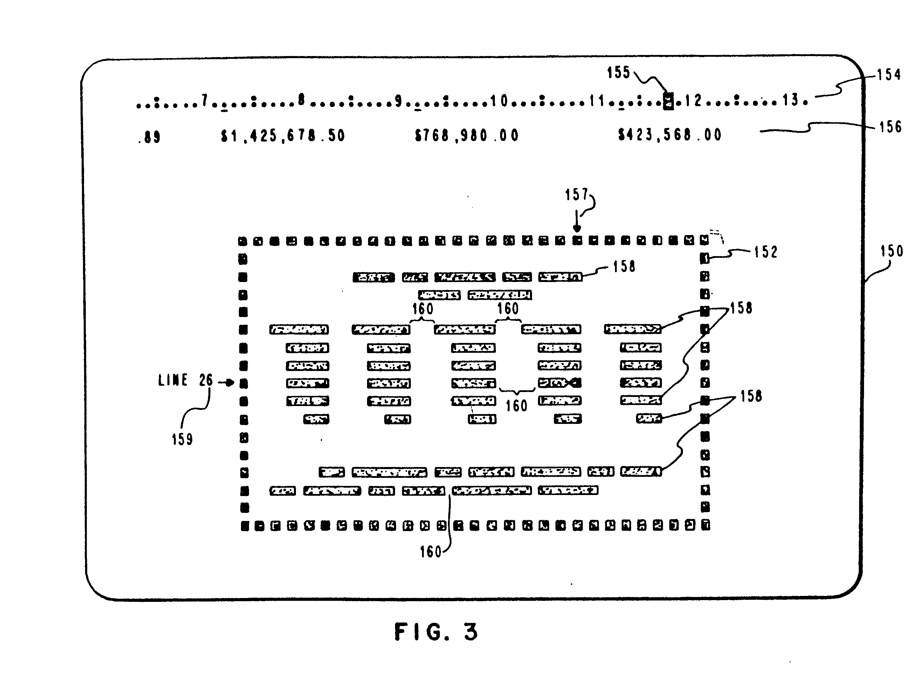

Referring now to Fig. 3, CRT screen 150 can be seen. Indicated generally at 152 is a miniature full page representation for showing format of the active page as it is processed. The full page representation has an outline 152 which is proportional to the hard copy output which will eventually result from the word processing system's operation. The page is outlined to aid the operator in appreciating its proportionality. Part of the menu options allow the operator to choose the height and width of the output page. Straightforward logic is implemented to determine exactly where on the output screen the miniature page is to appear.

Scale line 154 shows which 80 character segment of a line of text is being processed. This may be referred to as horizontal scrolling and is old in the art as disclosed for instance in commonly assigned US—A—3,654,609, Bluethman et al.

As part of the scale line there is a cursor character 155 which is directly over the character in active line 156 currently being developed. Arrow 157 points to the column of the active character and the legend Line 26 with an arrow 159 points to the row of the active character. Thus, the intersection of lines defined by arrows 157 and 159 is the point showing cursor position in the miniature full page representation. Because of the small size, this cursor position is made known to the operator by blinking that position.

Active line 156, which is the line being entered or altered in the page of text being developed in the system main memory is beneath scale line 154. Full page representation 152 is made proportional to the final printed output. True proportionality to printed pages output in 10 or 12 pitch, for example, additionally requires certain horizontal spacing adjustments. Solid areas 158 represent text placement within a text page. Solid areas 158, spaces 160, and outline 152, are displayed using miniature character representation constructs, which will be described in more detail in connection with Figs. 4 and 5.

As illustrated in Fig. 3 the invention has particular applicability in systems with a horizontal scrolling feature when preparing extra wide pages. Scale line 154 aids the operator only insofar as position in a single line is concerned. Proportional miniature page representation 152 enhances operator perception of the location of the active line and cursored character relative to the entire page. The manner in which this occurs will become clear as this discussion continues.

Fig. 4 is a schematic illustration of a normal size character box 410 as contemplated in the present invention. In our exemplary embodiment, this character box is 8×16, eight columns wide and 16 rows high. Rows are denoted R1 through R16; and columns, C1 through C8. A conventional CRT using interlaced scanning, as is well known in the art, can display dot matrix characters 8 dots wide by 16 dots high. Not all of these individual matrix positions are usually used for a given character. A regular character may, for example, by contained in rows 4 through 12 with the unused space being reserved for sub- and superscripts, and/or interline spacing. Columns 2 through 7 may be used for dots, and unused columns for inter-character spacing.

Fig. 5 shows how that same 8×16 matrix 410 can be divided into 16 2×4 miniature character representation boxes. In this manner we are able to display four characters for each of four consecutive lines in the space ordinarily occupied on a CRT screen by a single, normal size character. It is to be especially noted that the miniature page display is not a display of characters, but of character representations which enable an operator to comprehend format and spatial relationships on the page being processed.

It is the character representation structure which permits miniature page display with minimal circuitry impact. The use of interlaced scanning is advantageously combined with that structure. In interlaced scanning half of the alternating horizontal lines are first scanned. These may be referred to as Field 1. The other half of the horizontal lines, alternating with Field 1 lines, are then scanned. These lines are referred to as Field 2. Scan Fields 1 and 2 are interlaced together. In Fig. 5, the 16 rows are designated as 0F1, 1F1, 2F1 ... 7F1 or 0F2, 1F2, 2F2 ... 7F2, where F1 and F2 indicate scan Fields 1 and 2, respectively.

We use the convention that 0 is an even number. It can be seen then that the even rows of both Fields 1 and 2 are blank, i.e., not dotted. In each of the 16 separate character representation boxes, these even rows are the topmost two rows. The bottom two rows in each box represent characters or spaces. Boxes like 512 are characters. Those like 514 are spaces.

Returning briefly to Fig. 3, within miniature page representation 152 thick line segments 158 comprise a plurality of adjacent character representations 512 as shown in Fig. 5. spaces 160 consist of space representations 514 in Fig. 5. Outline 152 is comprised of character representations and spaces to give a dotted appearance.

Fig. 6 shows a character box 410 of the same 8×16 dimensions as that of Fig. 4. Three graphic symbols, 660, 662, and 664, are shown displayed therein. Symbols 660, 662, and 664 are representative of those commonly used to outline portions of a display screen. Of course, only one of the three would appear in a given character box at a given point in time. To attempt to use this prior art technique with a miniature full page representation composed of 2×4 character constructs leads to problems.

The symbol placement indicated at 660 is often used for righthand side outlining. Similarly the symbol placement indicated at 664 is frequently employed for lefthand side outlining. This pair of outlines would be adequate if there were no requirement for proportionality. It may be that to achieve proportionality, a page outline symbol placement as indicated at 662 is needed. The objective, however, is to provide the operator with a full appreciation of the relationship of a formatted full page of text to page boundaries. To achieve this, the operator must be able to display text right up to the page outline. However, combining miniature character indicators with a symbol such as 662 does not allow this since none of the miniature text representation can be displayed between the left edge of character box 410 and symbol 662.

Refer again to Fig. 5. It is possible with the invention to represent four characters in each of four lines (which may be consecutive lines of text or not) in the space normally occupied by a single character. The rightmost two columns 580 may be used for right hand vertical outline. Dots placed similarly in the leftmost two columns 582 may be used for the left hand vertical outline.

The technique of generating outlines as all or part of a text representation line gives a proportional page representation in which the text data can be displayed right up to the outline. This can be visualized by referring once again to Figs. 3 and 5.

The vertical portions of proportional outline 152 in Fig. 3 are the result displaying a plurality of character representation boxes containing dots such as those shown at 580 in Fig. 5. Fig. 5 could be a part of the right hand vertical portion of a miniature page representation. Similarly, if column 582 of Fig. 5 were configured as column 580, it could form part of the lefthand vertical portion of a miniature page outline.

The four bottommost rows 6F1, 6F2, 7F1, 7F2, of character box 410 of Fig. 5 illustrate the pattern used to display the horizontal portions (top and bottom) of miniature page outline 152 of Fig. 3. Clearly a pattern such as that formed by rows 2F1, 2F2, 3F1 and 3F2 could also be used, if desired.

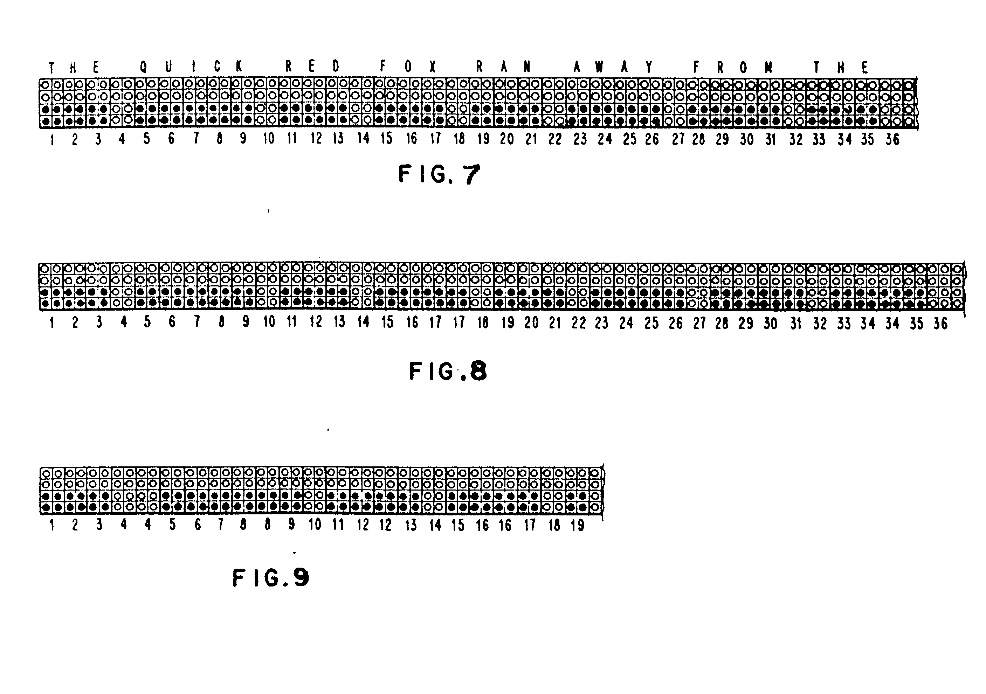

In Fig. 7 there can be seen an enlargement of a portion of a line from a miniature page representation such as 152 of Fig. 3. Not shown in Fig. 7 are the portions of the displayed line which comprise the vertical page outlines. Fig. 7 illustrates how the text, "THE QUICK RED FOX RAN AWAY FROM THE", would be represented using our character indicator construct. Text represented in this manner is adequate for comprehending spatial information of what is stored in memory. However, in sophisticated word processing systems with keyboard entry and display, and a relatively remote printer, the operator is given a menu with several options for output such as page size, line spacing, and print pitch.

With a horizontally scanned display, the dot spacings are normally longer in the vertical direction than the horizontal direction. For the particular display screen with which the invention is described the width of a dot is 0.32 mm and the height 0.34 mm. This difference causes a miniature page representation to be out of proportion by being long and skinny. In this particular embodiment it has been found that a 10 and 12 pitch page can be displayed on the CRT proportional to actual size by outputting a "padding" character at fixed intervals as needed. These intervals are a function of the pitch and the width to height ratio of a dot. In general the appropriate padding interval is determined using the width to height ratio of dot and the area of the display screen.

Refer now to Fig. 8 which shows the same text representation from Fig. 7, but modified so as to be proportional with 12 pitch output. Again it is to be noted in Fig. 8 that the character indicator which would comprise part of the outline is not shown. Comparing Figs. 7 and 8, it can be seen that the 17th character which is "X" is represented twice in Fig. 8. Also, the 34th character, which is "H", is output twice. This is because the width to height ratio for the particular CRT described in this embodiment requires doubling every 17th character indicator to assure proportionality with a 12 pitch printout. Since these are not real characters, but merely representations of characters, and every line has the same numbered character indicator output twice, columns such as those indicated in Fig. 3 remain aligned.

Similarly, Fig. 9 is the same text representation of Fig. 7 modified to be proportional to 10 pitch output. Once again it is to be noted that the portion of the text line comprising the vertical page outline has been omitted. For the CRT of this embodiment it has been found that the duplication of every fourth character will assure proportionality with 10 pitch output. So as illustrated in Fig. 9, the fourth character of Fig. 7, a blank, is output twice. Likewise, the "C" of QUICK, the "E" of RED, the "O" of FOX, and so forth are output twice.

As was just described with reference to Fig. 8, the miniature page representation displayed is proportional not only to a hard copy, but it also gives an operator a full understanding of the relationship of the text to page boundaries for formatting purposes. Obviously, this same concept could be applied to other CRT's with different sized dots, and using some scanning technique other than horizontal scanning.

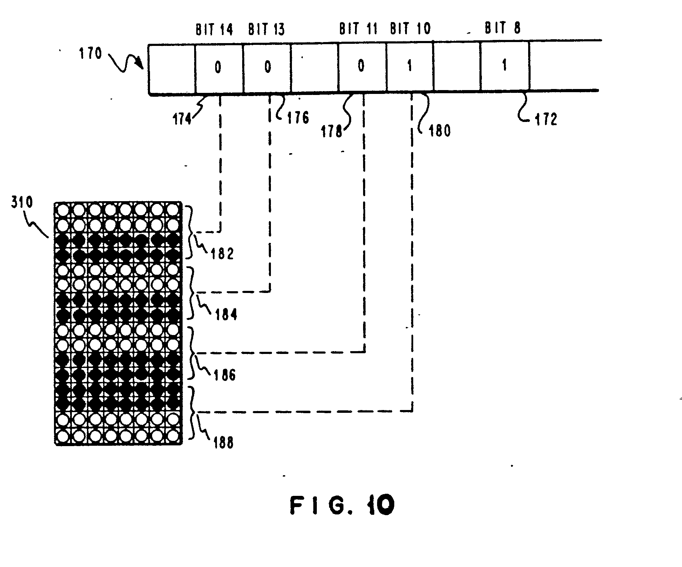

The miniature page indicated in Fig. 3 does not represent any multiple half-line spacing. It is shown for illustrative purposes only. Howver, referring now to Fig. 10, an appreciation for multiple half-line spacing may be gained. Indicated generally at 170 is a partial attribute byte. It will be recalled that normal size characters, that is characters displayed in an 8×16 character box, are represented in the refresh memory of Fig. 1 using two bytes. One is for attributes related to features such as underscore, reverse video, etc. Actual character data is stored in the other byte. When it is desired to begin displaying a miniature page representation, the operator so indicates; and a particular attribute bit, bit 8, is set on. The other byte containing character data would usually be loaded with a space. Each following two byte word opening, therefore, in a given line contains no further attribute data. The en1ire 16 bits of the two byte character location is utilized to represent 16 character/spaces.

Refer to Fig. 2 preparatory to a discussion of Fig. 10. Bus 46 carries bits 0—15 to miniature page generator 50. Bit 8, the miniature page attribute bit, is placed on line 200. Bus 204 carries bits 10, 11, 13, and 14, which are associated, respectively, with each of the four miniature lines of a given normal size character line. These bits are used to indicate whether these miniature lines are to be flipped.

Turning now to Fig. 10, the partial attribute byte 170 of bus 46 (Figs. 1 and 2) is represented. Bit 8 is indicated at 172 and is one to indicate that miniature page data is to be displayed for the rest of that line. Also shown is 8×16 character box 310 divided into four rows 182, 184, 186, and 188, of four miniature character representations.

The four character rows, which are consecutive rows as described with reference to Fig. 5, each have associated therewith a bit, 14, 13, 11 and 10, respectively, indicated respectively at 174, 176, 178 and 180 which indicates whether that entire line, not just the four characters shown in Fig. 10, is to be flipped. These four bits are stored in the same byte as the miniature page attribute bit.

Recall in Fig. 2 that line counts 2 and 4 on lines 212 and 214 are the select inputs to multiplexer 208 for determining which of four miniature lines associated with a given full size line is to be flipped. This selection is made in accordance with the following table.

TABLE I

| Mini Line | Line Count 2 | Line Count 4 |
|---|---|---|
| 182 | OFF | OFF |
| 184 | ON | OFF |
| 186 | OFF | ON |
| 188 | ON | ON |

Thus, on output, since bit 10 is set to 1, the miniature character boxes in row 188 are reversed to place solid dots at the top. This results in half line spacing. Similarly, rows 182, 184, and 186 are associated with bits 14, 13, 11, respectively. These attribute bits are off resulting in the associated rows being sent to the screen with single spacing.

It will be understood by those skilled in the art that it is possible on output to insert blank rows between any of rows 182, 184, 186, and 188 as desired. This will become more obvious as the description progresses.

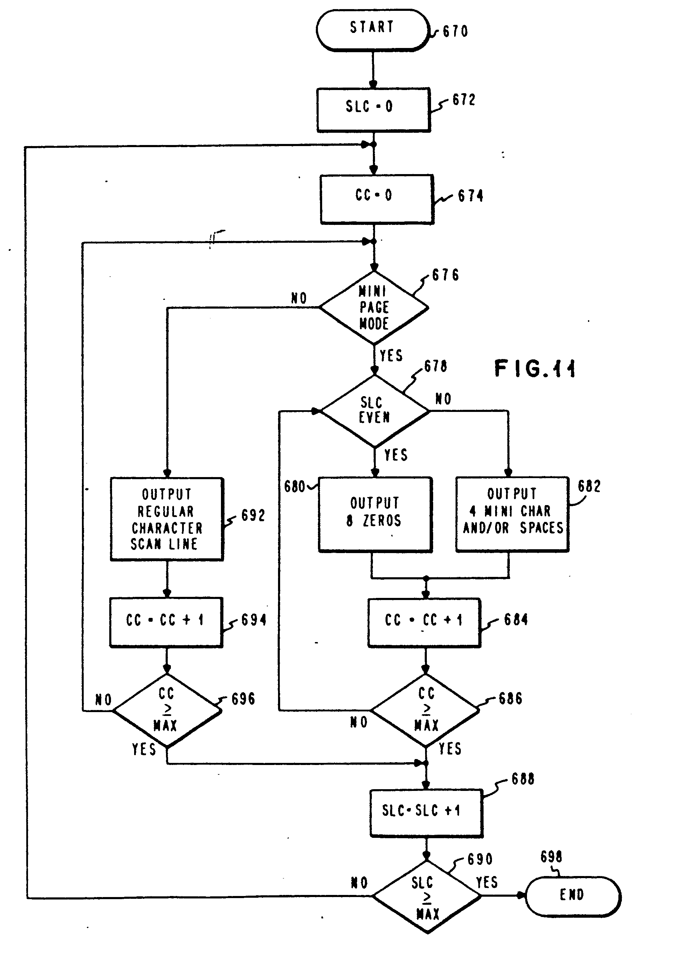

Fig. 11 is a flow chart of the interface logic for displaying on the CRT screen the line segments 158 and spaces 160 shown in Fig. 3. The process illustrated takes place in miniature page generator 50 (Fig. 1) and other associated parts of interface logic 9 (Fig. 1) in time after refresh memory 18 (Fig. 1) has been loaded with 1s and 0s under control of processor 6 (Fig. 1). These indicate each character and space comprising the page to be represented on the display screen. Text data, as is well understood by those skilled in the art, is stored in the word processing system main memory 8. Access to data in main memory 8 may be performed using conventional techniques.

The process shown in Fig. 11 is used against the character data on bus 46 in Fig. 2. That data is entered into data latch 24 (Fig. 1) via data busses 20 and 22 from the refresh memory 18 shown in Fig. 1.

The process beings at block 670. The scan line count, SLC, is initialized to "0" at block 672. Likewise, the character count, CC, is initialized to 0 at block 674.

Next, at decision block it is determined whether it is desired to output a miniature page. This determination is made by examining the attribute bit on line 200 (Fig. 1) dedicated to the miniature page function. This sets latch 222 (Fig. 2). Return briefly to Fig. 2. The miniature page attribute bit is bit 8 on line 200. If a miniature page is desired, then at block 678 a determination is made whether scan line count, SLC, is even. In Fig. 1, circuit means for generating scan line count signals on bus 74 is indicated at block 70. Returning to Fig. 11, if scan line count is even, then 8 "0"'s are output at 680 so that blanks are displayed on the screen. If scan line count is not even, that is odd, then control is passed to block 682 for outputting whatever is contained in the 4 character indicating bits taken from bus 46 in Fig. 2. If the bit in question is "1", ones are output; and if it is 0, zeros are output onto bus 90 of Figs. 1 and 2.

Each bit, when displayed as a blank or dot, is displayed twice, that is, put twice onto bus 90 of Fig. 2. Data lines 242, 244, 246, and 248 of Fig. 2 are each input twice into block 240. This is what causes each bit to be displayed twice.

It requires four horizontal scans to form the height of a miniature character. Recall in Fig. 5 the designators 0F1 ... 7F2. The 0 through 7 portions thereof correspond to scan line count SLC. Thus, whenever SLC is even, that is, 0, 2, 4, or 6, process block 680 causes zeros to be sent to video control 40 (Fig. 1) and thereby displays blanks on the screen. Similarly, SLC is not even for designators 1, 3, 5, and 7, in Fig. 5. Thusly, a 2×4 character representation matrix is developed from a single bit on bus 46 taken from refresh memory 18 of Fig. 1. There are four horizontal scans made to form each miniature character representation, and, depending upon whether scan line count is an even or odd integer, a blank or dot is twice displayed.

In either event, the next step in the process is incrementing character count CC at block 684. At block 686 a comparison is made to determine the relationship of character count CC to a predetermined maximum number of characters to be represented on a line in a particular miniature page display. If character count is greater than or equal to that maximum, scan line count is incremented as shown at 688. Horizontal retrace occurs at this same time. That is, line 66 (Fig. 1) has the horizontal reset signal applied thereto in the conventional manner. If the character count is less than the allowable maximum, control is returned to block 678 to complete the line being displayed.

After incrementing scan line count in block 688, block 690 indicates a determination of the relationship of scan line count magnitude to a predetermined maximum. If scan line count is less than maximum at block 690, a return is made to block 674 where character count is rest to "0", and the flow begins again from there to display another line. If scan line count is greater than or equal to the predetermined maximum, the process is terminated at block 698.

If at decision block 676 it is determined that no miniature page is desired, which means that the next character matrix does not contain miniature page data, then a single, regular character scan is output at block 692. Character count CC is incremented at block 694. A decision is made at block 696 whether character count CC is greater than or equal to the maximum allowed. If it is, then the scan line count is incremented at block 688, and the flow continues from there. If character count is less than the maximum, a return is made to decision block 676 to determine if a miniature page is desired to be displayed. If scan line count has not reached its maximum, a return to character count initialization block 674 is made.

In the particular embodiment, scan line count may reach a maximum of 7. There are 16 horizontal scans per line of normal characters. Having reference again to Fig. 4, a normal size character is shown in an 8×16 matrix. There are 16 rows one for each horizontal scan. It is to be remembered that we employ interlaced scanning. Therefore, 8 rows, or lines, are output when Field 1 is scanned and 8 are output when Field 2 is scanned, as earlier described with reference to Fig. 5. In each Field these rows/lines are numbered from 0 through 7. It is this line count for a given scan, and not the total number of character lines capable of appearing on the display screen, to which we refer.

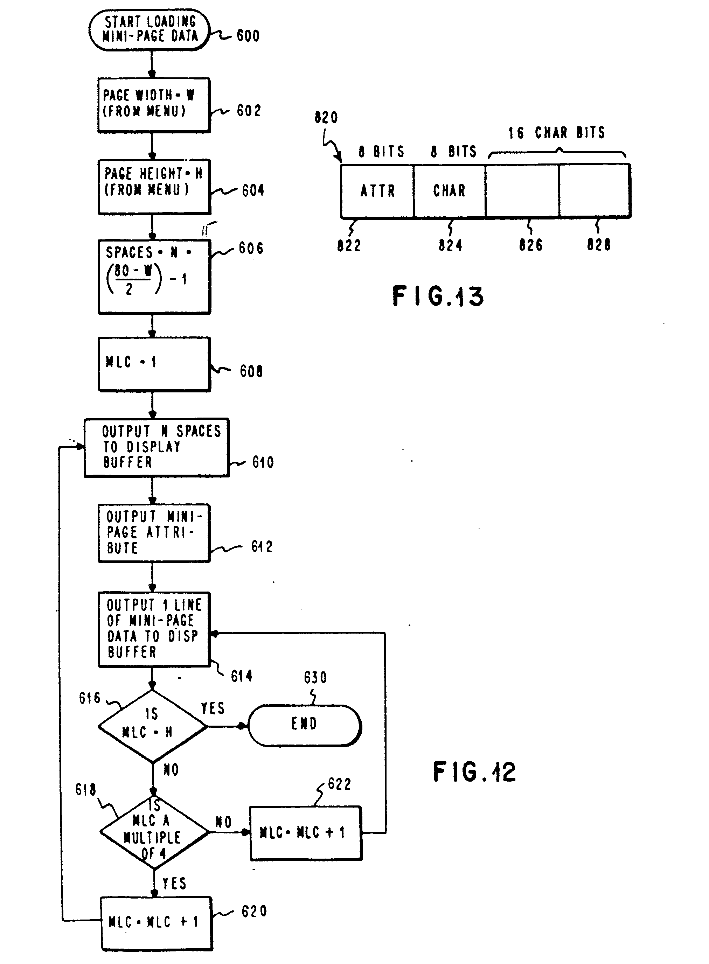

Fig. 12 describes the actions taken by processor 6 of Fig. 1 for loading refresh memory 18 with the miniature page representation to be displayed. In a conventional manner an operator of a word processing system employing the invention is presented a menu through which to choose several options. The operator is given an opportunity to let the system know what size page and in which orientation it is to be placed. In Fig. 12, a block 600 is the entry point for displaying a miniature page representation. Process block 602 represents the software retrieval of the operator indicated page width W. Likewise, block 604 represents the system retrieval of the operator designated page height H.

Process block 606 is an illustrative calculation made to determine how many spaces N remain on the display screen to the left of the page size chosen. In the particular application being described the screen width is assumed to be 80 characters wide and 25 lines high. The miniature page is centered on the screen. Obviously, other calculations would be made to accommodate screens of different sizes, or to position the miniature page in a different place on the screen.

At block 608 the miniature page line count, MLC, is initialized to 1. Block 610 represents a system command to load the number of spaces calculated in the previous block into the refresh memory 18 in Fig. 1. It should be obvious to those skilled in the art at this point that the N spaces could be any combination of character symbols and spaces to make up N. It is in this way that we are able to display regular, full size character symbols and text to the left of a miniature page display. This can be seen with reference to Fig. 3 where there is the legend LINE 26 to the left of miniature page outline 152.

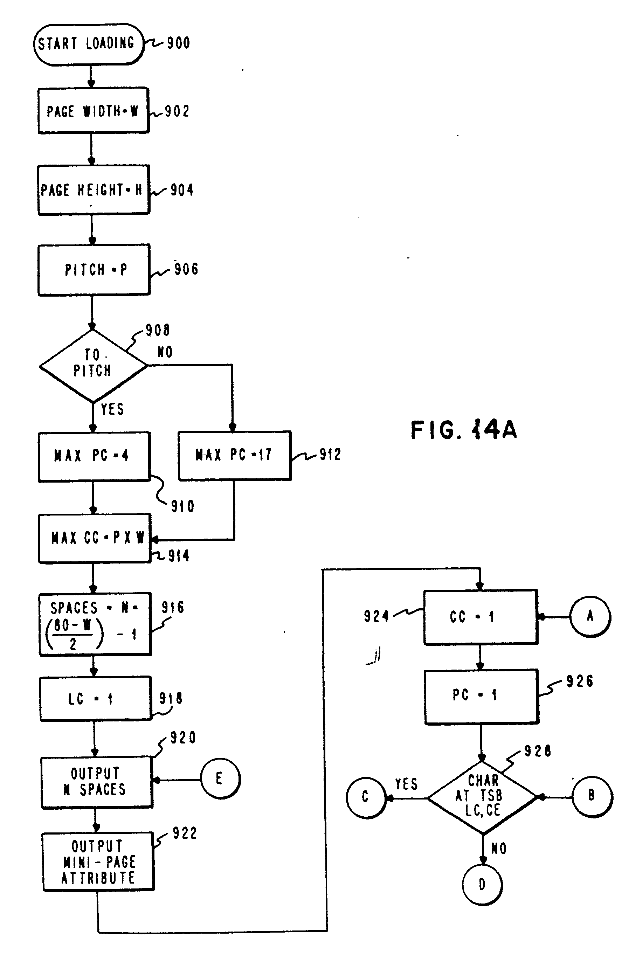

Returning now to Fig. 12, it is at block 612 that what we refer to as dynamic mode switching occurs. This will become clearer in the description accompanying Fig. 13. At this point it is sufficient to say that an indicator bit is loaded for the system to switch into the miniature page mode. At process block 614 the miniature page representation character indicators for an entire line of text are loaded into the refresh memory 18 in Fig. 1. Integral with the output of lines of text representation symbols is the outline 152 (Fig. 3) of the miniature page.

Decision block 616 represents the determination of whether the number of miniature lines output, MLC, has reached the limit set by the operator indicated page height H. If not, a determination whether MLC is an integral multiple of 4 is made at 618. If so, meaning that four miniature text lines corresponding spatially to one full size text line have been loaded into refresh memory 18 of Fig. 1, MLC is incremented by one at 620 and control passes back to block 610. If MLC is not an integral multiple of 4 then MLC is likewise incremented by 1 at block 622 but control returns to block 614 to load another miniature page line into refresh memory 18.

When MLC reaches the user set limit, page height H, processing ceases at terminator block 630.

Process block 612 represents formatting in the display refresh memory and subsequent displaying on the CRT of a line of miniature page representations. The line is W spaces wide as determined at block 602. If the miniature line is the horizontal portion of the outline, it is comprised of alternating character representation symbols and spaces to give a dashed appearance as illustrated in Fig. 3.

If the line being formatted in the display refresh memory is not one of the horizontal outline segments, then the first and W'th spaces become a portion of the left and right vertical outline segments, respectively. The result of a plurality of lines so formatted and displayed includes a righthand edge with the appearance illustrated in column 580 of Fig. 5.

It should be clear that when an operator is in a create document mode of operation using a system including the invention, each miniature page line is formatted as all blanks except for the first and Wth spaces. These spaces are formatted to form the vertical page outline. As text is keyed, the given line is reformatted in the display refresh memory.

The operator is therefore given an option regarding output page size to which the miniature page display is to be proportional.

The particular display buffer used for refresh memory 18 in Fig. 1 is organized on double byte boundaries, where each byte is eight bits long. Two bytes are used for each normal character. The leftmost 8 bits are used for attributes; the rightmost, actual character data. Fig. 8 shows two such double byte entires generally indicated at 820. The 8 bits used for attribute data are shown in byte 822, and 8 bits of character information are in byte 824. The organization in double byte is given as an example, but any other organization with attribute word and character word may be used. For a given output line containing miniature character indicators, however, miniature page attribute data is issued to the system only once for a line. All data thereafter is treated as miniature character representations.

A bit is reserved in the 8 bit byte usually used for attribute data, to indicate that a switch in mode from full size characters to miniature character indicators is to occur. It will be recalled from the discussion of Fig. 2 that it is this bit on line 200 which sets LATCH 222 for switching the system such that data bits on bus 44 from refresh memory 18 bypass character read only storage 76 and are transferred via bus 46 to the miniature page generator 50, and then via bus 90 to shift register 96.

Refer again to Fig. 13. As described earlier with reference to Figs. 4 and 5, 16 miniature character representations may be indicated or stored in the space in refresh memory 18 normally occupied by the attribute and character information for a single full size character. This is indicated in 8 bit blocks 826 and 828.

Refer once again to Fig. 12 where block 612 indicates the output of miniature page attribute. This function may be better understood when related to Fig. 13. For instance, byte 822, the attribute byte, contains, inter alia, the proper bit to signify to the system that a miniature page line is upcoming. While a character could immediately precede miniature page data, it may be desired to have a space preceding the miniature page when displayed. Thereafter, the next 16 bits are output from miniature page generator 50 (Fig. 1) as elsewhere described, as 16 2×4 character representations.

In this manner miniature page character indicators are output for the rest of that scan line. During horizontal scan reset all attributes are reset. Thus, for each scan line the process of indicating to the system when it is desired to switch modes is repeated. Because the miniature page mode, once indicated in the attribute, is on for the rest of that scan line, no full size character data may be displayed to the right of the miniature page in the embodiment herein described.

When the miniature page mode is desired to be entered as indicated to the system by operator action, a particular bit is set in the attribute byte of the last character space before the miniature page is to be displayed. The system is structured such that when a miniature page mode is entered on a given text line, the rest of that text line is in miniature page format. Up to that point on the text line, full size text may be displayed; however, it will be recalled that in this particular system a full size character is placed in an 8×16 character box and that the character construct used in the miniature page mode is a 2×4 character box. Sixteen miniature page character representation constructs fit in the space normally occupied by a full size character so that in one full size character box four miniature characters from four text lines which will be sequential lines are displayed.

When the text data is examined in the main memory 8 of Fig. 1 and one bit stored in the refresh memory 18 for each character or space, a given storage location of 16 bits is arranged so that there are four groups of four bits representing four characters or spaces from four different text lines.

Referring again to Fig. 1, the overall block diagram of the display word processing system including the invention, normal data flow when only full size text is to be displayed is from the main memory 8 to the refresh memory 18. The attribute byte on bus 20 which normally governs such things as cursor, blinking, reverse video, goes to the video control 40; and the data byte on bus 22 is used to access the character generator storage 76 so that the correct code is sent over busses 92 and 94 to parallel to serial converter 96 and thence to video control 40. When in the miniature page mode, however, there is but one attribute for the remainder of the line and once that has been detected the system is switched so that the path of the attribute data to the video control 40 is blocked and the path of the data bus 44 through the character generator storage 76 is blocked.

Rather both attribute and data busses 20 and 22 are placed along one bus 46 which goes through the miniature page generator 50 and then to the parallel to serial converter 96 via busses 90 and 94 and thence to the video control 40. It will be recalled from the discussion of Fig. 2, a more detailed diagram of the miniature page generator, that the one bit stored in the refresh memory 18 for each character or space is doubled for input to output driver block 240 and then output to the parallel data bus 90 which is serialized and sent to the video control for display on the screen.

Fig. 14A describes the actions taken by processor 6 for loading proportional miniature page data into the screen refresh memory 18, Fig. 1. The process starts at block 900. At block 902, the user indicated page width "W" is taken from the menu. Page height "H", also input by the user, is retrieved by the processor 6 of Fig. 1 at block 904. Similarly at block 906, the processor 6 in Fig. 1 takes the user indicated pitch "P" from the menu. This description is based on a choice between only 10 and 12 pitches. It will, of course, be obvious to those skilled in the art that maintaining proportionality with other output pitches would be developed along similar lines.

Decision block 908 determines whether the user desires 10 pitch. If so, the maximum pad character count MAX PC, is set to the value 4 at block 910. As just stated this example is provided for 10 and 12 pitch only. Therefore, the assumption is made that if the user has not indicated 10 pitch then the maximum pad character count MAX PC is set to 17 at block 912 corresponding to 12 pitch.

In view of the discussion of Figs. 8 and 9 it will be recalled that pad character count is the interval between repeated character representations on output. In either pitch after setting MAX PC, the maximum character count is calculated at block 914 to be equal to the pitch, that is 10 or 12, times page width "W". At block 916, the number of spaces which will remain available on the screen 150 (Fig. 3) to the left of the miniature page representation 152, assuming that it is centered on the display area, is calculated at block 916 to be 80 minus "W" width over 2, quantity minus 1. Again, the constant 80 is used because the particular display in the exemplary embodiment is 80 characters wide. It is, of course, obvious to those skilled in the art how to implement a technique such as that described on a screen of a different size.

At block 918 a miniature page line count LC is initialized to one, and the processor loads the previously calculated N spaces into the display refresh memory 18 (Fig. 1) at block 920. Then the processor 6 (Fig. 1) causes the miniature page attribute to be loaded into refresh memory 18 at block 922. Character count (CC) is initialized to one at block 924 to enable the processor to maintain the current count of character representations output in a given line. Similarly, at block 926, pad character count is initialized to one.

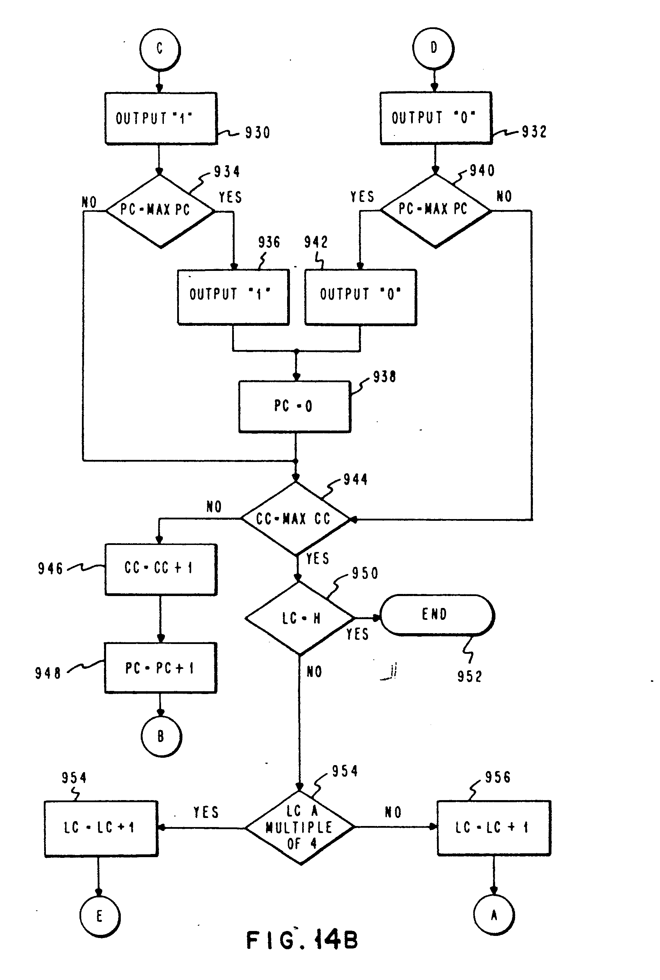

At block 928 the processor determines whether there is a character at the location in the text storage buffer portion of system main memory 8 indicated by the coordinates line count (LC), character count (CC). That is, at a given character position within a given line in text storage buffer, is there a character or a blank? If there is a character (Point C), the processor at block 930 (Point C, Fig. 14B) causes a one to be output to refresh memory 18. If there is no character in that particular location in the text storage buffer portion of the main memory 8 (Point D), then the processor outputs a zero to refresh memory 18 at block 932 (Point D, Fig. 14B).

Referring now to Fig. 14B at block 934 after having output a one to refresh memory 18 the processor determines whether pad count has reached the value of maximum pad count at block 934. If it has, then another one is output to display buffer at block 936. In other words if we are in 10 pitch where we duplicate every fourth character, then pad count equals four. Then pad count is then rest to zero at block 938. Similarly at block 940, which is reached after outputting a zero to refresh memory 18 which causes a blank to appear on the screen, the pad count is compared with maximum pad count. If there is a match, the processor at block 942 outputs another zero to refresh memory 18. Pad count is then reset to zero at block 938.

If the pad count is not the maximum pad count the processor goes directly at block 944.

In either event, that is after the placement of a one or zero in refresh memory 18, the processor determines at decision block 944 whether character count in the current line has reached the maximum character count. If it has not, character count is incremented by one in block 946, pad count is incremented by one in block 948, and the processor returns to decision block 928 (Point B) to determine the presence of a character at the corresponding location in the buffer portion of main memory 8.

If on the other hand, character count has reached the value of maximum character count then at block 950 processor 6 determines whether the current line count is equal to the user indicated page height and if so, the processor terminates at 952. If the full page has not yet been loaded for display as indicated by line counts being unequal to page height, then at decision block 954 the processor 6 determines whether the line count is an integral multiple of 4. If so, it increments line count at block 956 by 1 meaning that the equivalent of one normal character block size (8×16) line has been loaded into the memory 18 ready for output. Control then returns to block 920 (Point E) where N full size spaces are loaded into refresh memory 18. If, however, line count is not an integral multiple of four, line count is incremented by one at block 958 and the processor returns to block 924 (Point A) and sets character count equal to one to indicate the beginning of a new miniature page line.

In a word processing system embodying the invention it is possible for an operator to choose single 1 1/2, double, 2 1/2, triple, etc., line spacing for printed output. The primary purpose of displaying the miniature page is to give the operator the best possible understanding of how the final output will appear. It is, of course, important that spaces between lines to be accurately displayed within the miniature page representation. Integral line spacings are implemented, as can be well understood by those skilled in the art, by using conventional techniques to load blank lines between the lines of text in the display refresh buffer 18 shown in Fig. 1. For example, double spacing requires that one blank line be loaded between each two lines of text.

Half-line spacing, however, requires some modification to standard circuitry as previously described with reference to Fig. 2. A character representation is reversed in its 2×4 character box to achieve the half-line space. Within our unique 2×4 character representation box, the top 2×2 part is reversed with the bottom 2×2 part.

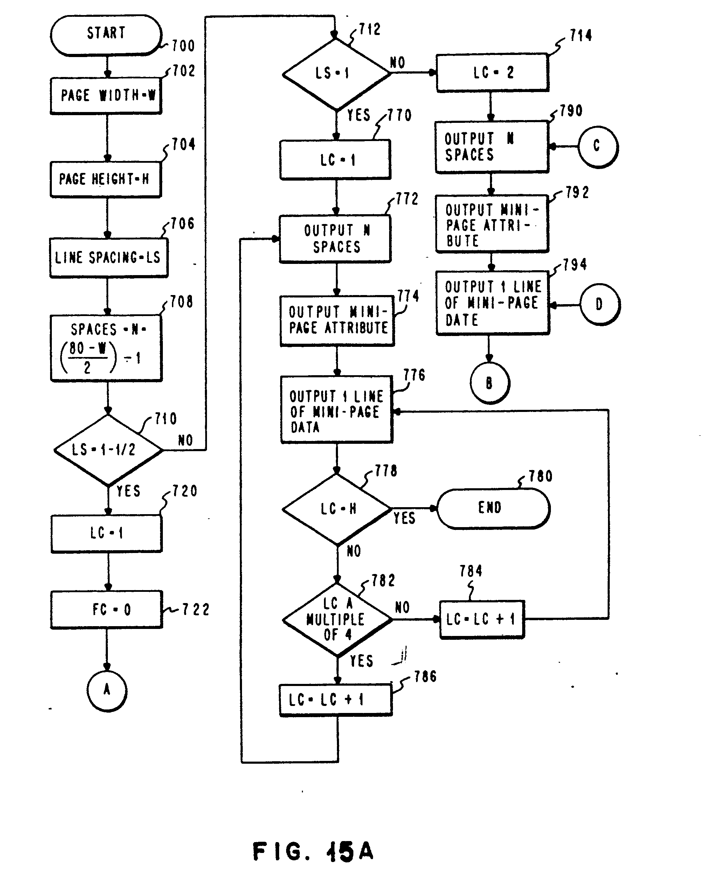

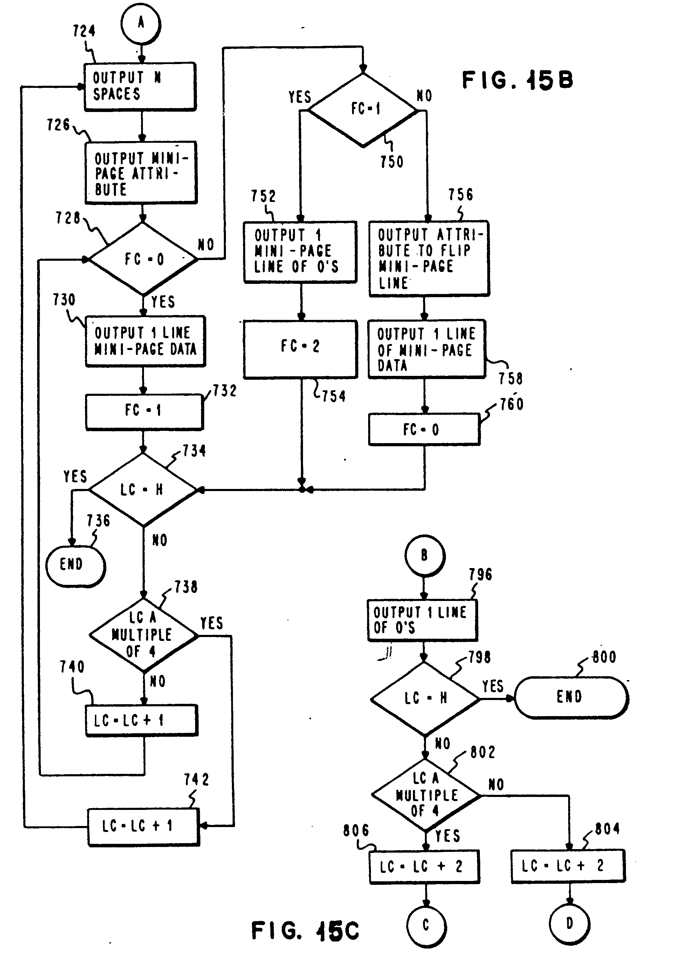

The operation of the invention will be described with reference to Figs. 2 and 15A—15C. One signal in data bus 46 is used as the miniature page attribute for input to AND gate 202. Four more bits, it will be recalled, from data bus 46 are sampled in bus 204 as inputs to a 4 to 1 multiplexer 208. Two of the line counts in bus 74, Line Count 2 and Line Count 4, are select inputs to the 16 to 4 multiplexer 210. These line counts are also select inputs to the 4 to 1 multiplexer 208. The output of AND gate 202 is used to set RS latch 222 and is an enable input to the 4 to 1 multiplexer. The output of the 4 to 1 multiplexer is the set input to RS latch 224. Once set, these RS latches 222 and 224 remain set until the horizontal reset signal on line 66 (from Fig. 1) is active. When RS latch 222 is set, its output, the miniature page latch signal, is used to inhibit the normal character attributes associated with the data bits in bus 46. The miniature page latch signal is used with the Data Clock signal on line 26 to set the D-latch 230. The output of D-latch 230, called miniature page mode signal, is used to disable all the normal character attributes and the character generator storage 76 (in Fig. 1). Miniature page mode is also input to block 240 where it is used to enable the outputs 250, 252, 254, 256, 258, 260, 262, and 264, which in turn are input to miniature page data bus 90.

Data bus 46 is input to the 16 to 4 multiplexer 210. The output of RS latch 224 is applied to line 228 and is input to EXCLUSIVE-OR block 218 with Line Count 1. The output of EXCLUSIVE-OR block 218 on line 219 is Line Count 1 when RS latch 224 is not set and is (NOT) Line Count 1 when RS latch 224 is set. The signal on line 219 is input to the 16 to 4 multiplexer as the Output Enable signal. The four outputs of the 16 to 4 multiplexer drive lines 242, 244, 246, and 248, respectively. Each is fanned out to form two data inputs to output driver block 240.

Thus, it can be seen that having the proper bit or bits in bus 204 active and selected into the 4 to 1 multiplexer at the same time that the miniature page attribute on line 200 is gated through AND gate 202 causes RS latch 224 to be set. The output of latch 224 on lined 228 will be input to EXCLUSIVE-OR gate 218. This causes the inverted signal from line 216 to be input to the 16 to 4 multiplexer 210. This in turn results in outputs on lines 242, 244, 246, and 248 being enabled during the upper half of the 2×4 miniature page character box rather than the normal lower half. By using this scheme, 1 1/2 line spacing can be shown in a miniature page representation as follows. It will be recalled that each of the four lines, 182, 184, 186, and 188, in a 4×16 box such as 310 in Fig. 10 is a separate miniature page line.

1. First normal size character line (16 bits/character) contains:
   a. first miniature line—normal orientation (2×4) character box);
   b. second miniature line—all spaces;
   c. third miniature line—flipped orientation (2×4 character box) (RS latch 224 set);
   d. fourth miniature line—normal orientation;
2. Second normal sized character line contains:
   a. fifth miniature line—all spaces;
   b. sixth miniature line—flipped orientation;
   c. seventh miniature line—normal orientation;
   d. eighth miniature line—all spaces.
3. Third normal sized character line contains:
   a. ninth miniature line—flipped orientation;
   b. tenth miniature line—normal orientation;
   c. eleventh miniature line—all spaces;
   d. twelfth miniature line—flipped orientation.
4. Etc.

In this example, the interline spacing between lines of miniature page characters has been increased so that effectively the miniature page character box is now 2×6 (1 1/2 line spacing), instead of the normal 2×4. It can be seen in this example that by using the proper combinations of normal, all spaces, and flipped miniature page lines any multiple of half line spacing above single line spacing can be displayed, i.e., 1, 1 1/2, 2, 2 1/2, 3, 3 1/2, etc.

The process of loading miniature page data from the system main memory 8 into the refresh memory 18 in Fig. 1 may be appreciated having reference to Fig. 15A—15C. It will be recalled that it is well known and conventional to present a menu frame on the CRT to the user of word processing systems. Using a light pen, keystroke or the like, the user/operator of the system indicates certain parameters for that particular job. Referring now to Fig. 15A, the process starts at block 700. The page width W is retrieved from the user designation on the menu frame at block 702. Likewise, block 704 indicates obtaining the user chosen page height H. Line spacing LS also from the menu is obtained in the step represented at block 706.

The overall objective of the invention is to provide the user of a keyboard display word processing system with a means for appreciating the ultimate hard copy format to be developed. This includes generating on the screen a proportional outline of the page size chosen and displaying character representations to indicate the relative spatial relationship including interlinear spacing. The first operation in this process performed by processor 6 of Fig. 1 is to determine the number of spaces which will remain to the left of the miniature page outline when displayed. Block 708 represents this calculation and is equal to 80, the number of horizontal spaces in the particular screen chosen as example minus W the width of the user chosen output divided by 2 take away 1. Clearly, screens having other widths would require the use of numbers other than 80.

Decision block 710 represents the process or determination whether the user chosen interlinear spacing is 1 1/2. If it is not 1 1/2 spacing, LS is checked against single spacing at decision block 712. If it is not single spacing, it is assumed to be double spacing at process block 714. At this point, it should be recognized that other multiples of these spacings will be handled in the same way as will be described.

For the sake of concise explanation, however, the Figure represents the process required for single, 1 1/2, and double spacing only.

If the line spacing chosen by the user is 1 1/2 spacing, then output line count LC is initialized to one at block 720 and flip count FC, a variable for use in formatting properly interlinearly spaced text representations, is initialized to zero at block 722 (Point A). Following on Fig. 15B (Point A) the processor at block 724 outputs N spaces to display refresh memory 18 of Fig. 1. Processor output of the miniature page attribute to the refresh memory is indicated at block 726.

If flip count FC is zero, as determined in decision block 728, then the processor outputs one line of miniature page data to refresh memory 18 at block 730 and then sets flip count equal to one at block 732. At decision block 734 the processor determines whether the miniature page line count is equal to the user chosen page height. If it is, processing terminates at end point 736.

If it is not, the processor determines whether line count has reached a number which is an integral multiple of 4 at decision block 738. If LC is not an integral multiple of 4, then at block 740 it is incremented by one and control returns to decision block 728. If line count is an integral multiple of 4, then at block 742 it is incremented by one and control is returned to block 724 where N spaces will be output to refresh memory 18.

It will be recalled at this point that, because four character representations from four miniature page lines are output in the space required by one full size character, N full size character blanks do not need to be output until four whole lines of miniature page data have been output.

If at decision block 728 flip count FC is determined to be not equal to zero, it is checked at 750 to see if it equals 1. If FC is equal to one, at block 752 a miniature page line of zeros is output to refresh memory 18 and flip count is set equal to 2 at block 754. Control is passed back to decision block 734. If, however, at decision block 750 flip count was found to be not equal 1, then at block 756 the processor outputs the attribute information previously described with reference to Fig. 10 to flip the miniature page line. That is, to indicate the absence or presence of data in the uppermost half of the 2×4 character box with the bottom half of each 2×4 character box in that particular miniature page line all blanks. Then at block 758, the processor outputs a regular, non-flipped line of miniature page data, sets FC equal to zero at block 760 and returns to block 734.

Returning in Fig. 15A, to decision block 712, if the user has chosen line spacing LS to be 1, then at process block 770 line count LC is set equal to 1. At block 772 the processor output of N spaces to refresh memory 18 is indicated. The next step is to output a miniature page attribute at block 774. At block 776 the processor causes one regular line of miniature page data to be output to the refresh memory 18 and then at decision block 778 determines whether line count has reached the user chosen page height H. If it has, processing terminates at termination point 780. If line count is not equal to the user chosen page height H, then the processor checks at decision block 732 to determine if line count is an integral multiple of 4. If not, line count is incremented by 1 at block 784 and control returns to block 776 and another line is output to the refresh memory 18. If, however, line count is an integral multiple of 4 then, as previously described with 1 1/2 spacing, line count is incremented by one at block 786 and control passes to block 772 to place N full size spaces in refresh memory 18 to the left of a miniature page outline.

For double spacing, that is with one line of blanks between each line of data representations, process block 714 represents the setting of line count equal to 2. At block 790 is represented the process of outputting N regular size spaces to refresh memory 18.

The miniature page attribute is output at block 792. The processor outputs one line of miniature page data as represented by block 794 (Point B). Following on Fig. 15C (Point B) a blank line on the display is caused by processor 6 outputting a complete line of zeros to the screen refresh memory 18 at block 796. Decision block 798 represents a determination of line counts reaching the user chosen page height. It it has, processing terminates at 800. If it has not, at block 802 the decision is made whether line count is an integral multiple of 4. If it is not, then line count is incremented by 2 at block 804 (Point D) and control returns to block 794 (Point D on Fig. 15A) to output another line of miniature page data. If line count is a multiple of 4, then it is incremented by 2 at 806 (Point C) and control returns to block 790 (Point C on Fig. 15A) to output N spaces to the refresh memory 18.

In conclusion, we have described a technique for providing the user of a word processing system including for example a relatively small, 80 character wide, 25 lines high display screen the capability of displaying simultaneously with full size character data a miniature full page representation. That full page representation is proportional to the final hard copy output desired. The full size character data displayed above and to the left of the full page representation and character indicators which form the the miniature full page representation are displayed to accomplish dynamic mode switching. This type of mode switching gives control of where the miniature page is positioned on the CRT screen.

The preferred embodiment includes a method of latching the miniature page attribute and using its bit in the attribute word as communicative page data in the remainder of the line. It should be obvious to one skilled in the art however, that in an application where it is not necessary to use all available bits for miniature page data that a miniature page attribute could be assigned to all character positions including could those with miniature page data. Thus, switching to and from miniature page mode may occur on the same scan. This allows regular size characters to be placed on any and all of the four sides of a miniature page representation.

It should also be obvious that dynamic mode switching as described herein could be used for generating bar graphs and the like using simulated miniature page data to display graphics along side regular size characters. As a further example, in a vertical scan application regular characters could be displayed above and to the right and left of the miniature page. Also, by selecting the proper scan lines, progressive scan applications can be made.

While this embodiment describes the invention being used with horizontal interlace scanning, it should be obvious to one skilled in the art to make appropriate modifications for use with progressive scanning and/or vertical scanning equipment.

Each line of the miniature page that is displayed has included therewith a portion in the form of a single character indicator of the outline of the page, the dimensions of which are such as to be proportional to the output. In this way, proportionality with hard copy is maintained.

The full size character data displayed above and to the left of the full page representation includes arrow indicators, the intersection of which represents the current cursor position. This position is caused to blink using conventional techniques. Character indicators which form the miniature full page representation are displayed to accomplish dynamic mode switching. The user thus has the advantages of a full page display on a standard small size screen on which horizontal segments of the active line are displayed at the same time its relative position in the whole page is shown.

The feature of multiple half-line spacing within the miniature page representation is provided to provide the operator with a true representation of the printed page on output. While a particular embodiment has been shown and described it will be obvious that other character box sizes may be used with appropriate modifications, as well as making certain modifications to accommodate particular display device requirements.

## Claims

1. Word processing system including input means, a display (150), a display memory (8) and a main memory, means, for producing hard copy output on different size media with one or several different character pitches and one or several interlinear spacings characterized in that it comprises:

means for displaying a miniature representation of a full page of text on less than the entire display, comprising:

means for storing an indicator in the display memory for each character in said main memory associated with the full page of text;

means for displaying at least a portion of a miniature character representation symbol (158) as a function mf the value of the indicator stored in the display memory;

means for displaying an outline (152) around said miniature representation of a full page of text, said outline being directly proportional to a selected one of the sizes of said hard copy output media.

2. Word processing system according to claim 1, characterized in that it further includes:

means for displaying at least another portion of a miniature character representation symbol (512) as a function of the location of the output scan.

3. Word processing system according to claim 1 or 2 characterized in that it includes a horizontal interlaced scanning display wherein odd and even numbered lines are alternatively scanned.

4. Word processing system according to claim 3 characterized in that it further includes:

means for monitoring the line count number during scanning on output;

displaying blanks (160) on the display if the line count is even;

and displaying character representations (512) as determined by the value of indicator access in the display memory if the line count is odd.

5. Word processing system according to any one of claims 1 to 4 characterized in that it includes means for displaying a miniature character representation symbol using a character box size which is an integral fraction of a normally displayed character box size.

6. Word processing system according to any one of claims 1 to 5 characterized in that said means for storing comprises means for storing one bit indicative of the presence or absence of a character in said main memory.

7. Word processing system accordung to any one of claims 1 to 6 characterized in that said means for displaying character representations displays twice for each indicator stored in the display memory.

8. Word processing system according to any one of claims 1 to 7 characterized in that it further includes means for providing a character indicator which is used to both represent text characters and said page outline.

9. Word processing system according to claims 1 or 8 characterized in that the means for displaying said outline includes means for determining from user input the media size to be represented.

10. Word processing system according to any one of claims 1 to 9 characterized in that an outlined miniature full page representation is comprised of symbols displayed in a character box the size of which is an integral fraction of a normally displayed character box size.

11. Word processing system according to any one of claims 1 to 10 characterized in that it includes:

means for horizontally segmenting text lines wider than the display;

means for displaying simultaneously, at least a portion of at least one cursored line of active text.

12. Word processing system as in claim 11 characterized in that it further includes means for indicating simultaneously in said less than full size page representation the corresponding location of the active line of text.

13. Word processing system as in claim 11 or 12 characterized in that it further includes means for displaying within said less than full size representation of a complete, full page of text symbols indicating text character relative positions.

14. Word processing system according to any one of claims 11 to 13 characterized in that it further includes means for indicating within said less than full size representation the position corresponding to the cursor position within the line of active text.

15. Word processing system according to any one of claims 11 to 14 characterized in that the length of the cursored line of active text displayed is less than the length of the actual text.

16. Word processing system according to any one of claims 1 to 15 characterized in that it includes:

means for monitoring the number of N character indicators during output;

means responsive to an operator chosen pitch for hard copy output, for multiples displaying every Nth miniature character symbol or space where the value of N is a function of the pitch chosen.

17. Word processing system according to claim 16 characterized in that the value of N is a function of the width to height ratio of the display element.

18. Word processing system according to any one of claims 1 to 17 characterized in that:

said representation comprises miniature character symbol constructs arranged to reflect desired interlinear spacing;

said interlinear spacing including integral and non-integral spacing.

19. Word processing system according to claim 18 characterized in that said non-integral spacing is half-line spacing.

20. Word processing system according to claim 18 or 19 characterized in that integral interlinear spacing between rows of miniature character symbol constructs is composed of displayed blanks (160).

21. Word processing system according to any one of claims 18 to 20 characterized in that said miniature symbol constructs are dot matrices including upper and lower halves.

22. Word processing system according to any one of claims 18 to 21 characterized in that half-line spacing is provided by reserving the contents of the upper and lower halves of said miniature symbol constructs.

23. Word processing system according to any one of claims 18 to 22 characterized in that the lower half of each miniature symbol construct is used to represent the presence or absence of data.

24. Word processing system according to any one of claims 18 to 23 characterized in that the bottom half of one row of said miniature symbol constructs is displayed above the top half and at least one adjacent row is displayed in ordinary sequence in order to represent half-line spacing.

25. Word processing system according to any one of claims 18 to 24 characterized in that multiple half-line spacing is achieved by displaying at least one row of blanks adjacent said row of reversed halves.

26. Word processing system according to any one of claims 1 to 25 characterized in that it comprises:

means for dynamically switching from displaying full size data representations to miniature data displaying;

means for loading a predetermined attribute word, immediately after full size character data, said predetermined attribute word being accessible to said means for switching said display means into means for displaying a miniature page representation.

27. In a word processing system including input means, a display (150), a main memory (8), a display memory, means for producing a hard copy output on different size media with one or several different character pitches and one or several interlinear spacings, a method of text processing characterized in that it includes the steps of:

displaying a representation of a full page of text on less than the entire display by:

1) storing in said display memory an indicator of the presence or absence of a character of text stored in the main memory;

2) monitoring a line count number during scanning on output;

3) displaying blanks (160) on the display if the line is blank or if there is a space; and

4) displaying at least a portion of a miniature character representation as determined by the value of the indicator accessed in the display memory if there is a character;

displaying an outline (152) around said representation of a full page of text, said outline being proportional to a selected one of said different sizes of hard copy output media.

28. Method of text processing according to claim 27 characterized in that said storing step includes setting a single bit in said display memory for each text character position in the main memory.

29. Method of text processing according to claim 27 or 28 characterized in that said fourth step of displaying includes displaying each character representation twice.

30. Method of text processing according to claim 27 characterized in that it includes the further step of displaying full size text immediately adjacent said miniature representation.

31. Method of text processing according to claim 27 or 30 characterized in that it includes the step of using the same character indicator for both outlining and representing text.

32. Method of text processing according to any one of claims 27 to 32 characterized in that it further comprises the steps of:

1) displaying a cursored active line of text (156);

2) displaying within said miniature page representation symbols (660, 662, 664) indicating text character relative positions.

33. Method of text processing according to claim 32 characterized in that it includes the step of indicating within said miniature page representation the location of the cursor within an active line (156) of text.

34. Method of text processing according to claims 32 or 33 characterized in that the step of displaying a cursored active line (156) includes displaying a portion of an active line which active line is longer than the maximum possible on the display screen.

35. Method of text processing according to any one of claims 27 to 34 characterized in that it comprises the further step of:

varying the horizontal spacing within the miniature full page representation as a function of the pitch chosen.

36. Method of text processing according to claim 35 characterized in that the said horizontal spacing within the miniature full page representation is varied as a function of the ratio of the width to height of the display element.

37. Method of text processing according to claims 35 or 36 characterized in that the varying step includes multiple display of every Nth character indicator, N having a predetermined value as a function of output pitch.

38. Method of text processing according to any one of claims 27 to 37 characterized in that it includes the steps of:

1) loading a predetermined attribute word, immediately after full size character data;

2) accessing said predetermined attribute word by means for switching said display means into means for displaying a miniature page representation;

3) switching said display means into means for displaying a miniature page representation.

**Patentansprüche**

1. Textverarbeitungssystem mit Eingabemitteln, einer Anzeige (150), einem Anzeigespeicher (8) und einem Hauptspeicher, Mitteln für die Ausgabe von Druckexemplaren auf Medien verschiedener Grösse mit einem oder mehreren verschiedenen Zeichenabständen und einem oder mehreren Zeilenabständen, dadurch gekennzeichnet, dass es umfasst:

Mittel für die Anzeige einer Miniaturdarstellung einer vollen Textseite auf weniger als der gesamten Anzeigefläche, enthaltend:

Mittel für die Speicherung eines Zeigers im Anzeigespeicher für jedes Zwischen im besagten Hauptspeicher, das der vollen Textseite angehöhrt,

Mittel für die Anzeige von mindestens einem Abschnitt eines Miniaturzeichendarstellungssymbols (158) als Funktion des Wertes des im Anzeigespeicher gespeicherten Zeigers.

Mittel für die Anzeige einer Umrandung (152) um besagte Miniaturdarstellung einer vollen Textseite herum, wobei besagte Umrandung direkt proportional zu einer ausgewählten Grösse der besagten Druckmittel ist.

2. Textverarbeitungssystem gemäss Anspruch 1, dadurch gekennzeichnet, dass us ausserdem enthält:

Mittel für die Anzeige von mindestens einem weitern Abschnitt eines Miniaturzeichendarstellungssymbols (512) in Abhängigkeit von der Position des Ausgabeabtasters.

3. Textverarbeitungssystem gemäss Anspruch 1 oder 2, dadurch gekennzeichnet, dass eine horizontal verknüpfte Abtastanzeige enthält, in der die Zeilen mit Geraden bzw. Ungeraden abwechselnd abgetastet werden.

4. Textverarbeitungssystem gemäss Anspruch 3, dadurch gekennzeichnet, dass er ferner enthält:

Mittel für die Aufzeichnung der Zeilenzahl während der Abtastung an der Anzeige;

Aneige von Leerzeichen (160) auf der Anzeige, wenn die Zeilenzahl gerade ist;

und Anzeige von Zeichenweidergaben (512), wie sie durch einen Wert des Zeigerzugriffs im Anzeigespeicher bestimmt werden, wenn die Zeilenzahl ungerade ist.

5. Textverarbeitungssystem gemäss, einem der Ansprüche 1 bis 4, dadurch gekennzeichnet, dass es Mittel für die Anzeige eines Miniaturzeichendarstellungssymbols besitzt, in dem die Grösse eines Zeichenkastens verwendet wird, die ein ganzzahliger Bruchteil einer normal angezeigten Zeichenkastengrösse ist.

6. Textverarbeitungssystem gemäss einem der Ansprüche 1 bis 5, dadurch gekennzeichnet, dass die Speichermittel Mittel für die Speicherung eines Bits enthalten, das anzeigt, ob im besagten Hauptspeicher ein Zeichen vorhanden ist oder nicht.

7. Textverarbeitungssystem gemäss einem der Ansprüche 1 bis 6, dadurch gekennzeichnet, dass die besagten Mittel für die Anzeige von Zeichendarstellungen jeden im Anzeigespeicher enthaltenen Zeiger zweimal anzeigt.

8. Textverarbeitungssystem gemäss einem der Ansprüche 1 bis 7, dadurch gekennzeichnet, dass er ferner Mittel enthält, einen Zeichenanzeiger zu liefern, der verwendet wird, um sowohl Textzeichen als auch besagte Seitenumrandung weiderzugeben.

9. Textverarbeitsungssystem gemäss Anspruch 1 oder 8, dadurch gekennzeichnet, dass die Mittel für die Anzeige der besagten Umrandung Mittel für die Bestimmung der wiederzugebenden Trägergrösse durch Eingabe des Bedieneres enthält.

10. Textverarbeitungssystem gemäss einem der Ansprüche 1 bis 9, dadurch gekennzeichnet, dass die Wiedergabe einer umrandeten Miniaturganzseite aus Symbolen besteht, die in einer Zeichengrösse wiedergegeben sind, deren Grösse ein ganzzahliger Bruch einer normal wiedergegebenen Zeichenkastengrösse ist.

11. Testverarbeitungssystem gemäss einem der Ansprüche 1 bis 10, dadurch gekennzeichnet, dass es enthält:

Mittel für die horizontale Trennung von Textzeilen, die grösser sind als die Anzeige,

Mittel für die gleichzeitige Anzeige von mindestens einem Abschnitt von mindestens einer Zeile des aktiven Textes, auf der sich gerade der Kursor befindet.

12. Textverarbeitungssystem gemäss Anspruch 11, dadurch gekennzeichnet, dass es ausserdem Mittel für die gleichzeitige Anzeige der entsprechenden Stelle der aktiven Textzeile in weniger als der Vollseitendarstellung anzeigt.

13. Textverarbeitungssystem gemäss Anspruch 11 oder 12, dadurch gekennzeichnet, dass er ferner Mittel enthält, um innerhalb von weniger als der Darstellung einer kompletten vollen Textseite in voller Grösse Textsymbole anzuzeigen, die die relativen Positionen der Textzeichen wiedergeben.

14. Textverarbeitungssystem gemäss einem der Ansprüche 11 bis 13, dadurch gekennzeichnet, dass er ferner Mittel enthält, um innerhalb der Darstellung auf weniger als der vollen Seite die Position anzuzeigen, die der Kursorposition innerhalb der aktiven Textzeile entspricht.

15. Textverarbeitungssystem gemäss einem der Ansprüche 11 bis 14, dadurch gekennzeichnet, dass die Länge der Zeile des aktiven Textes, in der der Kursor steht, kürzer ist als die Länge des wirklichen Textes.

16. Textverarbeitungssystem gemäss einem der Ansprüche 1 bis 15, dadurch gekennzeichnet, dass es enthält:

Mittel für die Anzeige der Anzahl von N Zeichenanzeigern während der Ausgabe,

Mittel, die auf einen vom Bediener gewählten Zeichenabstand für den Ausdruck ansprechen, für mehrfache Anzeige von jedem N. Miniaturzeichensymbol oder Leerraum, wo der Wert von N abhängig vom gewählten Abstand ist.

17. Textverarbeitungssystem gemäss Anspruch 16, dadurch gekennzeichnet, dass der Wert von N abhängig vom Verhältnis Breite zu Höhe des Anzeigeelementes ist.

18. Textverarbeitungssystem gemäss einem der Ansprüche 1 bis 17, dadurch gekennzeichnet, dass:

besagte Darstellung Miniaturzeichensymbole enthält, die angeordnet sind, um den gewünschten Zeilenabstand wiederzugeben.

Der besagte Zeilenabstand ganzzahlige und nicht ganzzahlige Zeilenabstände enthält.

19. Das Textverarbeitungssystem gemäss Anspruch 19 dadurch gekennzeichnet ist, dass besagte nicht ganzzahlige Abstände Halbzeilenabstände sind.

20. Textverarbeitungssystem gemäss Anspruch 18, oder 19, dadurch gekennzeichnet, dass ganzzahlige Zeilenabstände zwischen Reihen von Miniaturzeichensymbolen aus angezeigten Leerzeichen (160) bestehen.

21. Textverarbeitungssystem gemäss einem der Ansprüche 18 bis 20, dadurch gekennzeichnet, dass besagte Miniatursymbole Punktmatrizen sind, die jeweils eine obere und eine untere Hälfte enthalten.

22. Textverarbeitungssystem gemäss einem der Ansprüche 18 bis 21, dadurch gekennzeichnet, dass die Halbzeilenabstände durch Aussparung des Inhalts der oberen und der unteren Hälfte der besagten Miniaturzeichen weidergegeben wird.

23. Textverarbeitungssystem gemäss einem der Ansprüche 18 bis 22, dadurch gekenzeichnet, dass die untere Hälfte eines jeden Miniaturzeichensymbols verwendet wird, um das Vorhandensein oder Nichtvorhandensein von Daten wiederzugeben.

24. Textverarbeitungssystem gemäss einem der Ansprüche 18 bis 23, dadurch gekennzeichnet, dass die untere Hälfte einer Reihe der besagten Miniatursymbole über der oberen Hälfte angezeigt, wird, und mindestens eine anliegende Zeile in einer normalen Sequenz wiedergegeben wird, um den Halbzeilenabstand wiederzugeben.

25. Textverarbeitungssystem gemäss einem der Ansprüche 18 bis 24, dadurch gekennzeichnet, dass der mehrfache Halbzeilenzwischenraum erzielt wird durch Wiedergabe von mindestens einer Reihevon Leerstellen, anliegend an besager Reihe ausgesparter Hälften.

26. Textverarbeitungssytem gemäss einem der Ansprüche 1 bis 25, dadurch gekennzeichnet, dass es enthält:

Mittel für das dynamische Umschalten von der Anzeige der Daten in voller Grösse auf die Anzeige in Miniaturgrösse;

Mittel für die Ladung eines vorgegebenen Attributwortes unmittelbar nach den Zeichendaten in voller Grösse, wobei besagtes vorgegebenes Attributwort zugänglich für besagte Mittel ist, um die besagten Anzeigemittel umzuschalten in Mittel für die Anzeige einer Miniaturseitendarstellung.

27. In einem Textverarbeitungssystem, das Eingabemittel, eine Anzeige (150), einen Hauptspeicher (8), einen Anzeigespeicher, Mittel für die Erzeugung eines Ausdrucks auf Medien verschiedener Grösse mit einem oder mehreren verschiedenen Zeichenabständen und einen oder mehreren Zeichenabstände enthält, ein Verfahren der Textverarbeitung, dadurch gekennzeichnet, dass es folgende Schritte enthält:

Anzeige einer Darstellung einer vollen Textseite auf weniger als der ganzen Anzeigefläche durch:

1) Speicherung im besagten Anzeigespeicher eines Zeigers für die Anwesenheit oder Abwesenheit eines im Hauptspeicher enthaltenen Textzeichens;

2) Wiedergabe einer Zeilenzahl beim Abtasten an der Ausgabe;

3) Anzeigeleerzeichen (160) auf der Anzeige, wenn die Zeile leer ist oder wenn ein Leerraum vorhanden ist; und

4) Anzeige von mindestens einem Abschnitt einer Miniaturzeichendarstellung, wie sie durch den Wert des Anzeigers bestimmt wird, der im Anzeigespeicher gewählt wird, wenn dort ein Zeichen vorhanden ist;

Anzeige einer Umrandung (152) um die besagte Darstellung der vollen Textseite herum, wobei besagte Umrandung proportional zu einer ausgewählten Grösse der Druckttträger ist.

28. Textverarbeitungsverfahren gemäss Anspruch 27, dadurch gekennzeichnet, dass der besagte Speicherschritt das Einsetzen eines einzelnen Bits im besagtem Anzeigespeicher für jede Textzeichenposition im Hauptspeicher enthält.

29. Textverarbeitungsverfahren gemäss Anspruch 27 oder 28, dadurch gekenzneichnet, dass im besagten 4. Anzeigeschritt, die jede Zeichendarstellung zweimal angezeigt wird.

30. Textverarbeitungsverfahren gemäss Anspruch 27, dadurch gekennzeichnet, dass es ausserdem die Schritte der Anzeige des Textes in voller Grösse unmittelbar neben der Miniaturdarstellung enthält.

31. Textverarbeitungsverfahren gemäss Anspruch 27 oder 30, dadurch gekennzeichnet, dass es die Schritte der Verwendung des gleichen Zeichenanzeigers sowohl für die Umrandung als auch für die Darstellung von Text verwendet.

32. Textverarbeitungsverfahren gemäss einem der Ansprüche 27 bis 32, dadurch gekennzeichnet, dass es ferner folgende Schritte enthält:

1) Anzeige einer aktiven Textzeile (156), auf der der Kursor steht;

2) Anzeige, innerhalb der besagten Miniaturseitendarstellungssymbole (660, 662, 664), der relativen Positionen der Textzeichen.

33. Textverarbeitungsverfahren gemäss Anspruch 32, dadurch gekennzeichnet, dass es den Schritt der Anzeige, innerhalb der Miniaturseitendarstellung der Stelle des Kursors in einer aktiven Textzeile (156) enthält.

34. Textverarbeitungsverfahren gemäss Anspruch 32 oder 33, dadurch gekennzeichnet, dass der Schritt der Anzeige einer Aktivzeile (156), auf der der Kursor steht, die Anzeige eines Abschnitts einer Aktivzeile enthält, wenn die Aktivzeile länger ist als die auf dem Anzeigebildschirm verfügbare maximale Länge.

35. Textverarbeitungsverfahren gemäss einem der Ansprüche 27 bis 34, dadurch gekennzeichnet, dass es ferner folgende Schritte enthält:

18

Veränderung der horizontalen Abstände innerhalb der Miniatur-Ganzseitenwiedergabe in Abhängigkeit vom gewählten Zeilenabstand.

36. Textverarbeitungsverfahren gemäss Anspruch 35, dadurch gekennzeichnet, dass die horizontalen Abstände innerhalb der Miniaturganzseitenwiedergabe in Abhängigkeit vom Verhältnis Breite zu Höhe des Anzeigeelementes veränderlich sind.

37. Textverarbeitungsverfahren gemäss Anspruch 35 oder 36, dadurch gekennzeichnet, dass der veränderliche Schritt die mehrfache Anzeige von jedem N. Zeichenanzeiger enthält, wobei N einen vorgegebenen Wert hat, der vom Ausgabezeichenabstand abhängig ist.

38. Textverarbeitungsverfahren gemäss einem der Ansprüche 27 bis 37, dadurch gekennzeichnet, dass es folgende Schritte enthält:

1) Laden eines vorgegebenen Attributwortes unmittelbar nach den Daten eines Zeichens in Voller Grösse;

2) Zugriff zum besagten vorgegebenen Attributwort durch Schaltmittel, um besagte Anzeigemittel in Mittel für die Anzeige einer Miniaturseitenwiedergabe umzuschalten,

3) Umschalten der besagten Anzeigemittel für die Anzeige einer Miniaturseitenwiedergabe.

**Revendications**

1. Système de traitement de mots comprenant des moyens d'entrée, une unité d'affichage (150), une mémoire d'affichage (8) et une mémoire principale, des moyens de production d'un tirage de sortie sur des milieux de différentes tailles à un ou plusieurs pas de caractères différentes et avec un ou plusieurs espacements inter-lignes, caractérisé en ce qu'il comprend:

des moyens pour afficher une représentation miniature d'une page entière de texte sur moins de l'affichage entier, comprenant:

des moyens pour emmagasiner un indicateur dans la mémoire d'affichage pour chaque caractère dans ladite mémoire principale associé à la page complète de texte,

des moyens pour afficher au moins une partie d'un symbole de·représentation de caractère miniature (158) en fonction de la valeur de l'indicateur emmagasiné dans la mémoire d'affichage,

des moyens pour afficher un cadre (152) autour de ladite représentation miniature d'une page complète de texte, ledit cadre étant directement proportionnel à une taille sélectionnée parmi les tailles desdits milieux de sortie de tirage.

2. Système de traitement de mots selon la revendication 1, caractérisé en ce qu'il comprend en outre:

des moyens pour afficher au moins une autre partie d'un symbole de représentation de caractère miniature (512) en fonction de l'emplacement du balayage de sortie.

3. Système de traitement de mots selon la revendication 1 ou 2 caractérisé en ce qu'il comprend une unité d'affichage à balayage entrelacé horizontal dans lequel des lignes à numérotations paires et impaires sont alternativement balayées.

4. Système de traitement de mots selon la revendication 3 caractérisé en ce qu'il comprend en outre:

des moyens pour surveiller le compte de lignes pendant le balayge à la sortie,

l'affichage de blancs (160) sur l'unité d'affichage si le compte de lignes est pair,

et l'affichage de représentations de caractères (512) comme déterminé par la valeur d'accès indicateur dans la mémoire d'affichage si le compte de lignes est impair.

5. Système de traitement de mots selon l'une quelconque des revendications 1 à 4 caractérisé en ce qu'il comprend des moyens pour afficher un symbole de représentation de caractère miniature en utilisant une boite de caractère dont la taille est une fraction entière d'une taille de boite de caractère normalement affiché.

6. Système de traitement de mots selon l'une quelconque des revendications 1 à 5 caractérisé en ce que lesdits moyens d'emmagasinage comprennent des moyens pour emmagasiner un bit indicateur de la présence ou de l'absence d'un caractère dans ladite mémoire principale.

7. Système de traitement de mots selon l'une quelconque des revendications 1 à 6 caractérisé en ce que lesdits moyens pour afficher des représentations de caractère effectuent un double affichage pour chaque indicateur emmagasiné dans la mémoire d'affichage.

8. Système de traitement de mots selon l'une quelconque des revendications 1 à 7 caractérisé en ce qu'il comprend en outre des moyens pour fournir un indicateur de caractère qui est utilisé pour représenter à la fois des caractères de texte et ledit cadre de page.

9. Système de traitement de mots selon la revendication 1 ou 8 caractérisé en ce que les moyens pour afficher ledit cadre comprennent des moyens pour déterminer depuis l'entrée utilisateur la taille du milieu à représenter.

10. Système de traitement de mots selon l'une quelconque des revendications 1 à 9 caractérisè en ce qu'une représentation de page complète miniature encadrée est composée de symboles affichés dans une boite de caractère dont la taille est une fraction entière d'une taille de boite de caractère normalement affiché.

11. Système de traitement de mots selon l'une quelconque des revendications 1 à 10 caractérisé en ce qu'il comprend:

des moyens pour segmenter horizontalement des lignes de texte plus larges que l'affichage,

des moyens pour afficher simultanement au moins une partie d'au moins une ligne à curseur de texte actif.

12. Système de traitement de mots selon la revendication 11 caractérisé en ce qu'il comprend en outre des moyens pour indiquer simultanément sur moins d'une représentation de page en taille réelle, l'emplacement correspondant de la ligne active de texte.

13. Système de traitement de mots selon la revendication 11 ou 12 caractérisé en ce qu'il comprend en outre des moyens pour afficher sur moins d'une représentation en taille réelle d'une page entière de texte, des symboles indiquant des positions relatives de caractères de texte.

14. Système de traitement de mots selon l'une quelconque des revendications 11 à 13 caractérisé en ce qu'il comprend en outre des moyens pour indiquer sur moins d'une représentation en taille réelle, la position correspondant à la position du curseur sur la ligne de texte actif.

15. Système de traitement de mots selon l'une quelconque des revendications 11 à 14 caractérisé en ce que la longueur de la ligne à curseur de texte actif affichée est inférieure à la longueur du texte réel.

16. Système de traitement de mots selon l'une quelconque des revendications 1 à 15 caractérisé en ce qu'il comprend:

des moyens pour surveiller le nombre des N indicateurs de caractère pendant la sortie,

des moyens répondant à un pas choisi par l'opérateur pour le tirage de sortie, pour l'affichage multiple de chaque Nième symbole ou espace de caractère miniature, la valeur de N étant fonction du pas choisi.

17. Système de traitement de mots selon la revendication 16 caractérisé en ce que la valeur de N est fonction du rapport largeur/hauteur de l'élément d'affichage.

18. Système de traitement de mots selon l'une quelconque des revendications 1 à 17 caractérisé en ce que:

ladite représentation comprend des constructions de symboles de caractère miniature agencés pour refléter l'espacement inter-lignes désiré, ledit espacement inter-lignes comprenant l'espacement intégral et non-intégral.

19. Système de traitement de mots selon la revendication 18 caractérisé en ce que ledit espacement non-intégral est l'espacement de 1/2 ligne.

20. Système de traitement de mots selon la revendication 18 ou 19 caractérisé en ce que l'espacement inter-lignes intégral entre des rangées de constructions de symboles de caractère miniature est composé de blancs affichés (160).

21. Système de traitement de mots selon l'une quelconque des revendications 18 à 20 caractérisé en ce que lesdites constructions de symboles miniatures sont des matrices de points comprenant des moitiés supérieure et inférieure.

22. Système de traitement de mots selon l'une quelconque des revendications 18 à 21 caractérisé en ce que l'espacement de 1/2 ligne est obtenu en réservant le contenu des moitiés supérieure et inférieure desdites constructions de symboles miniatures.

23. Système de traitement de mots selon l'une quelconque des revendications 18 à 22 caractérisé en ce que la moitié inférieure de chaque construction de symboles miniatures est utilisée pour représenter la présence ou l'absence de données.

24. Système de traitement de mots selon l'une quelconque des revendications 18 à 23 caractérisé en ce que la moitié inférieure d'une rangée desdites constructions de symboles miniatures est affichée au dessus de la moitié supérieure et en ce qu'au moins une rangée adjacente est affichée en séquence ordinaire afin de représenter l'espacement de 1/2 ligne.

25. Système de traitement de mots selon l'une quelconque des revendications 18 à 24 caractérisé en ce que l'espacement de 1/2 ligne multiple est assuré en affichant au moins une rangée de blancs adjacente à ladite rangée de moitiés inversées.

26. Système de traitement de mots selon l'une quelconque des revendications 1 à 25 caractérisé en ce qu'il comprend:

des moyens de commutation dynamique de l'affichage de représentations de données en taille réelle à l'affichage de données miniatures,

des moyens pour charger un mot attribut prédéterminé immédiatement après des données de caractère en taille réelle, ledit mot attribut prédéterminé étant accessible auxdits moyens pour commuter lesdits moyens d'affichage en moyens d'affichage d'une représentation de page miniature.

27. Dans un système de traitement de mots comprenent des moyens d'entrée, une unité d'affichage (150), une mémoire principale (8), une mémoire d'affichage, des moyens pour produire un tirage de sortie sur des milieux de taille différente à un ou plusieurs pas de caractères différents et selon un ou plusieurs espacements inter-lignes, une méthode de traitement de texte caractérisée en ce qu'elle comprend les étapes suivantes:

l'affichage d'une représentation d'une page entière de texte sur moins de l'affichage entier en:

1) emmagasinant dans ladite mémoire d'affichage un indicateur de la présene ou de l'absence d'un caractère de texte emmagasiné dans la mémoire principale,

2) surveillant un compte de lignes pendant le balayage à la sortie,

3) affichant des blancs (160) sur l'affichage si la ligne est en blanc ou si il y a un espacement, et

4) en affichant au moins une partie d'une représentaon de caractères miniatures comme déterminé par la valeur de l'indicateur accédé dans la mémoire d'affichage s'il y a un caractère,

l'affichage d'un cadre (152) autour de ladite représentation d'une page entière de texte, ledit cadre étant proportionnel à une taille sélectionnée parmi les différentes tailles du milieu de sortie des tirages.

28. Méthode de traitement de texte selon la revendication 27 caractérisée en ce que ladite étape d'emmagasinage comprend le conditionnement d'un bit unique dans ladite mémoire d'affichage pour chaque emplacement de caractère de caractère de texte dans la mémoire principale.

29. Méthode de traitement de texte selon la revendication 27 ou 28 caractérisée en ce que ladite quatrième étape d'affichage comprend l'affichage double de chaque représentation de caractère.

30. Méthode de traitement de texte selon la revendication 27 caractérisée en ce qu'elle comprend l'étape supplémentaire d'affichage de texte en taille normale immédiatement adjacent à ladite représentation miniature.

31. Méthode de traitement de texte selon la revendication 27 ou 30 caractérisée en ce qu'elle comprend l'étape d'utilisation du même indicateur de caractère à la fois pour le cadrage et la représentation de texte.

32. Méthode de traitement de texte selon l'une quelconque des revendications 27 à 32 caractérisée en ce qu'elle comprend en outre les étapes suivantes:

1) l'affichage d'une ligne active de texte à curseur (156),

2) l'affichage dans ladite représentation de page miniature, de symboles (660, 662, 664) indiquant des emplacements relatifs de caractère de texte.

33. Méthode de traitement de texte selon la revendication 32 caractérisée en ce qu'elle comprend l'étape d'indication dans ladite réprésentation de page miniature, de l'emplacement du curseur sur une ligne active (156) de texte.

34. Méthode de traitement de texte selon la revendication 32 ou 33 caractérisée en ce que l'étape d'affichage d'une ligne active à curseur (156) comprend l'affichage d'une partie d'une ligne active, laquelle ligne active est plus longue que la longueur maximale possible sur l'écran d'affichage.

35. Méthode de traitement de texte selon l'une quelconque des revendications 27 à 34 caractérisé en ce qu'elle comprend létape supplémentaire de:

modification de l'espacement horizontal dans la représentation de page entière miniature en fonction du pas choisi.

36. Méthode de traitement de texte selon la revendication 35 caractérisée en ce que ledit espacement horizontal dans la représentation de page entière miniature est modifié en fonction du rapport largeur/hauteur de l'élément d'affichage.

37. Méthode de traitement de texte selon les revendications 35 ou 36 caractérisée en ce que l'étape de modification comprend le multiple affichage de chaque Nième indicateur de caractère, N ayant une valeur prédéterminée en fonction du pas de sortie.

38. Méthode de traitement de texte selon l'une quelconque des revendications 27 à 37, caractérisé en ce que qu'elle comprend les étapes suivantes:

1) le chargement d'un mot attribut prédéterminé immédiatement après les données de caractére en taille normale,

2) l'accès audit mot attribut prédéterminé par des moyens de commutation desdits moyens d'affichage en moyens d'affichage d'une représentation de page miniature,

3) la commutation desdits moyens d'affichage en moyens d'affichage d'une représentation de page miniature.

FIG. 1

FIG. 2

FIG. 3

FIG. 4

FIG. 6

FIG. 5

FIG. 7

FIG. 8

FIG. 9

F I G. 10

FIG. 11

START LOADING
MINI-PAGE DATA — 600

PAGE WIDTH - W
(FROM MENU) — 602

PAGE HEIGHT - H
(FROM MENU) — 604

SPACES - N -
$\left(\dfrac{80-W}{2}\right) - 1$ — 606

MLC - 1 — 608

OUTPUT N SPACES
TO DISPLAY
BUFFER — 610

OUTPUT MINI-
PAGE ATTRI-
BUTE — 612

OUTPUT 1 LINE
OF MINI-PAGE
DATA TO DISP
BUFFER — 614

616 — IS
MLC - H     YES     END — 630

NO

618 — IS
MLC A
MULTIPLE
OF 4     NO     MLC - MLC + 1 — 622

YES

MLC - MLC + 1 — 620

FIG.12

820

8 BITS     8 BITS     16 CHAR BITS

ATTR     CHAR

822     824     826     828

FIG.13

8

EP 0 054 693 B1

FIG. 14A

9

EP 0 054 693 B1

FIG. 14B

START — 700

PAGE WIDTH=W — 702

PAGE HEIGHT=H — 704

LINE SPACING=LS — 706

SPACES =N= $\left(\dfrac{80-W}{2}\right) - 1$ — 708

LS=1-1/2 — 710

NO

YES

LC=1 — 720

FC=0 — 722

A

LS=1 — 712

NO → LC=2 — 714

YES

LC=1 — 770

OUTPUT N SPACES — 772

OUTPUT MINI-PAGE ATTRIBUTE — 774

OUTPUT 1 LINE OF MINI-PAGE DATA — 776

LC=H — 778

YES → END — 780

NO

LC A MULTIPLE OF 4 — 782

NO → LC=LC + 1 — 784

YES

LC=LC + 1 — 786

OUTPUT N SPACES — 790

C

OUTPUT MINI-PAGE ATTRI-BUTE — 792

OUTPUT 1 LINE OF MINI-PAGE DATE — 794

D

B

FIG. 15A

11

# FIG. 15B

(A)

724 → OUTPUT N SPACES

726 → OUTPUT MINI-PAGE ATTRI-BUTE

728 → FC = 0
- NO →
- YES ↓

730 → OUTPUT 1 LINE MINI-PAGE DATA

732 → FC = 1

734 → LC = H
- YES → 736 → END
- NO ↓

738 → LC A MULTIPLE OF 4
- YES →
- NO ↓

740 → LC = LC + 1

742 → LC = LC + 1

750 → FC = 1
- YES ←
- NO →

752 → OUTPUT 1 MINI-PAGE LINE OF 0'S

754 → FC = 2

756 → OUTPUT ATTRI-BUTE TO FLIP MINI-PAGE LINE

758 → OUTPUT 1 LINE OF MINI-PAGE DATA

760 → FC = 0

# FIG. 15C

(B)

796 → OUTPUT 1 LINE OF 0'S

798 → LC = H
- YES → 800 → END
- NO ↓

802 → LC A MULTIPLE OF 4
- YES ↓
- NO →

806 → LC = LC + 2

804 → LC = LC + 2

(C)        (D)

FIG.16